# EUROPÄISCHE PATENTSCHRIFT

(11) **EP 3 552 714 B1**
(45) Veröffentlichungstag und Bekanntmachung des Hinweises auf die Patenterteilung: **17.02.2021**
(21) Anmeldenummer: 18167071.2
(22) Anmeldetag: 12.04.2018
(51) Int. Cl.: B05B 7/14

(54) **PULVERFÖRDERER ZUM FÖRDERN VON BESCHICHTUNGSPULVER, VERFAHREN ZUM HERSTELLEN DES PULVERFÖRDERERS UND PULVERZENTRUM MIT DEM PULVERFÖRDERER ZUM VERSORGEN EINER PULVERBESCHICHTUNGSANLAGE**
POWDER CONVEYOR FOR CONVEYING COATING POWDER, METHOD FOR PRODUCING THE POWDER CONVEYOR AND POWDER CENTRE WITH THE POWDER CONVEYOR FOR SUPPLYING A POWDER COATING INSTALLATION
TRANSPORTEUR DE POUDRE DESTINÉ À TRANSPORTER LE POUDRE DE REVÊTEMENT, MÉTHODE DE FABRIQUATION DE TRANSPORTATEUR ET CENTRE D'ALIMENTATION EN POUDRE POURVU DE TRANSPORTEUR DE POUDRE DESTINÉ À ALIMENTER UN CENTRE D'ALIMENTATION EN POUDRE

(43) Veröffentlichungstag der Anmeldung: 16.10.2019
(73) Patentinhaber: WAGNER INTERNATIONAL AG, 9450 Altstätten (CH)
(72) Erfinder: Lutz, Gilbert, 9451 Kriessern (CH); Studerus, Patrik, 9323 Steinach (CH); Dietsche, Michael, 9451 Kriessern (CH)
(74) Vertreter: Nückel, Thomas

(56) Entgegenhaltungen:
- EP-A1- 3 238 832
- DE-B3-102005 006 522

## Beschreibung

### Technisches Gebiet

Die Erfindung betrifft einen Pulverförderer zum Fördern von Beschichtungspulver und ein Pulverzentrum mit dem Pulverförderer zum Versorgen einer Pulverbeschichtungsanlage.

### Stand der Technik

Aus der europäischen Patentanmeldung EP 3 238 832 A1 ist eine Pulverfördervorrichtung zum Fördern von Beschichtungspulver zu einem Pulverapplikator bekannt. Die Pulverfördervorrichtung weist einen Zwischenbehälter auf, der ein Pulver-Einlassventil und ein Pulver-Auslassventil umfasst, wobei letzteres mit einem darunter angeordneten Arbeitsbehälter verbunden ist. Der Zwischenbehälter dient als Pulverförderer dazu Beschichtungspulver von einem Pulvervorratsbehälter in den Arbeitsbehälter zu fördern. Im Zwischenbehälter befindet sich eine semipermeable Wand, die für Luft durchlässig, für Pulver hingegen undurchlässig ist. Wird nun die Luft durch die semipermeable Wand aus dem Zwischenbehälter gesaugt, entsteht dort ein Unterdruck und Pulver wird in den Zwischenbehälter gesaugt. Sobald das Pulver-Auslassventil geöffnet wird, fällt das Pulver aufgrund der Schwerkraft in den Arbeitsbehälter. Es kann vorkommen, dass sich während der Pulverförderung Pulver im Zwischenbehälter ablagert. Diese Pulverablagerung kann bei einem Farbwechsel zu einem erhöhten Reinigungsaufwand führen.

### Darstellung der Erfindung

Eine Aufgabe der Erfindung ist es, einen Pulverförderer zum Fördern von Beschichtungspulver und ein Pulverzentrum mit dem Pulverförderer zum Versorgen einer Pulverbeschichtungsanlage anzugeben, bei dem die Möglichkeit, dass sich im Inneren des Pulverförderers Pulver ablagern kann, minimiert ist.

Vorteilhafter Weise kann mit dem erfindungsgemässen Pulverförderer das Pulver durch Ausnutzung der Schwerkraft mit wenig oder ohne zusätzliche Druckluft in einen Pulvervorratsbehälter gefördert werden. Durch diese Förderart entsteht weniger Pulver-Luftgemisch, das nach aussen dringen kann. Folglich wird dadurch die Gefahr minimiert, Pulverpartikel einzuatmen. Ein weiterer Vorteil ist, dass mit dieser Förderart auch ein eventuell im Pulverförderer eingesetztes Ultraschallsieb geschont wird.

Die Aufgabe wird durch einen Pulverförderer zum Fördern von Beschichtungspulver mit den in Patentanspruch 1 angegebenen Merkmalen gelöst.

Der erfindungsgemässe Pulverförderer zum Fördern von Beschichtungspulver weist ein Gehäuse für einen Behälter auf. Das Gehäuse umfasst ein Gehäuseoberteil mit einem Pulvereinlass und einem oberen Absatz. Zudem umfasst das Gehäuse ein Gehäuseunterteil mit einem Pulverauslass und einem unteren Absatz. Der obere Absatz und/oder der untere Absatz schliessen mit der Horizontalen einen spitzen Winkel ein. Zudem ist ein Rohr vorgesehen, dessen Rohrenden offen sind, sodass das Pulver das Rohr durchqueren kann. Das Rohr ist aus einem porösen, luftdurchlässigen Material und stirnseitig zwischen dem oberen Absatz des Gehäuseoberteils und dem unteren Absatz des Gehäuseunterteils eingespannt. Des Weiteren ist ein Pulvereinlassventil vorgesehen, das mit dem Pulvereinlass des Gehäuseoberteils verbunden ist. Zudem ist ein Pulverauslassventil vorgesehen, das mit dem Pulverauslass des Gehäuseunterteils verbunden ist.

Die Aufgabe wird zudem durch ein Pulverzentrum mit dem oben beschriebenen Pulverförderer zum Versorgen einer Pulverbeschichtungsanlage mit den in Patentanspruch 12 angegebenen Merkmalen gelöst.

Das erfindungsgemässe Pulverzentrum zum Versorgen einer Pulverbeschichtungsanlage mit Beschichtungspulver weist den oben beschriebenen Pulverförderer zur Versorgung eines Pulvervorratsbehälters auf. Der Pulvervorratsbehälter umfasst eine Pulverfördervorrichtung, um Pulver aus dem Pulvervorratsbehälter in Richtung Pulverbeschichtungsanlage zu transportieren. Ein Behälterdeckel ist vorgesehen, der während der Pulverförderung den Pulvervorratsbehälter abdeckt und zum Zwecke der Reinigung des Pulvervorratsbehälters abnehmbar ist. Das Pulverzentrum umfasst zudem eine Reinigungseinheit zum Reinigen des Pulvervorratsbehälters und des Behälterdeckels. Die Reinigungseinheit ist mittels eines Manipulators aus einer Parkposition neben dem Pulvervorratsbehälter in eine Reinigungsposition im Pulvervorratsbehälter bewegbar. Darüber hinaus ist eine Steuerung vorgesehen, mit der der Pulverförderer, die Pulverförderervorrichtung, die Reinigungseinheit und der Manipulator steuerbar sind.

Die Aufgabe wird zudem durch ein Verfahren zum Herstellen des oben beschriebenen Pulverförderers mit den in Patentanspruch 15 angegebenen Merkmalen gelöst.

Das erfindungsgemässe Verfahren zum Herstellen des oben beschriebenen Pulverförderers umfasst folgende Schritte. Das Rohr wird erwärmt. Mit einem Werkzeug werden die Rohrenden des erwärmten Rohrs so geformt, dass die Stirnseiten des Rohrs zu den schrägen Absätzen im Gehäuse passen. Das Rohr wird zwischen dem Gehäuseoberteil und dem Gehäuseunterteil eingespannt.

Vorteilhafte Weiterbildungen der Erfindung ergeben sich aus den in den abhängigen Patentansprüchen angegebenen Merkmalen.

Bei einer Ausführungsform des erfindungsgemässen Pulverförderers ist das Gehäuseoberteil trichterförmig ausgebildet.

Bei einer weiteren Ausführungsform des erfindungsgemässen Pulverförderers ist das Gehäuseunterteil trichterförmig ausgebildet.

Bei einer anderen Ausführungsform des erfindungsgemässen Pulverförderers liegt der Winkel des oberen Absatzes und/oder der unteren Absatzes in einem Bereich von 1° bis 7°.

Bei dem erfindungsgemässen Pulverförderer kann vorgesehen sein, dass die an den oberen Absatz angrenzende Innenwand mit der Vertikalen einen Winkel einschliesst, der in einem Bereich von 5° bis 15° liegt.

Bei dem erfindungsgemässen Pulverförderer kann auch vorgesehen sein, dass die an den unteren Absatz angrenzende Innenwand mit der Vertikalen einen Winkel einschliesst, der in einem Bereich von 5° bis 15° liegt.

Bei einer Weiterbildung des erfindungsgemässen Pulverförderers nimmt der Abstand zwischen dem oberen Absatz und dem unteren Absatz zur Längsachse des Gehäuses hin ab. Dadurch wird erreicht, dass die Enden des Rohrs nicht nach innen gedrückt werden. Es wird sichergestellt, dass sich am Übergang zwischen dem oberen Rohrende und dem Gehäuseoberteil kein Absatz bildet und sich dort also auch kein Pulver ablagern kann. Das Gleiche gilt sinngemäss auch für den Übergang zwischen dem unteren Rohrende und dem Gehäuseunterteil.

Bei einer anderen Weiterbildung des erfindungsgemässen Pulverförderers weist das erste und/oder das zweite Rohrende eine Fase auf.

Bei einer zusätzlichen Weiterbildung des erfindungsgemässen Pulverförderers weist das Rohr eine Länge auf, die zwischen 1 mm und 3 mm grösser ist, als der Abstand zwischen dem oberen Absatz und dem unteren Absatz.

Bei dem erfindungsgemässen Pulverförderer kann das Gehäuse ein rohrförmiges Gehäusemittelteil aufweisen.

Bei dem erfindungsgemässen Pulverförderer kann zudem vorgesehen sein, dass das Gehäusemittelteil mit dem Gehäuseunterteil verschraubt und/oder verklebt ist.

Bei einer Ausführungsform des erfindungsgemässen Pulverzentrums ist die Steuerung derart ausgebildet und betreibbar, dass sie im Reinigungsbetrieb das Innere des Pulverförderers mit Spülluft spülen kann.

Bei einer anderen Ausführungsform des erfindungsgemässen Pulverzentrums weist die Reinigungseinheit Druckluftdüsen zum Abblasen des Pulvervorratsbehälters und des Behälterdeckels auf.

### Kurze Beschreibung der Zeichnungen

Im Folgenden wird die Erfindung mit mehreren Ausführungsbeispielen anhand von 18 Figuren weiter erläutert.
- Figur 1: zeigt eine erste mögliche Ausführungsform des erfindungsgemässen Pulverförderers zum Fördern von Beschichtungspulver in der Seitenansicht.
- Figur 2: zeigt die erste Ausführungsform des erfindungsgemässen Pulverförderers zum Fördern von Beschichtungspulver in der Draufsicht.
- Figur 3: zeigt die erste Ausführungsform des erfindungsgemässen Pulverförderers im Längsschnitt.
- Figur 4: zeigt Details des erfindungsgemässen Pulverförderers im Längsschnitt.
- Figur 5: zeigt in einem schematischen Blockschaltbild eine Pulverbeschichtungsanlage mit mehreren der erfindungsgemässen Pulverförderer.
- Figur 6: zeigt eine erste mögliche Ausführungsform des erfindungsgemässen Pulverzentrums im Pulverfördermodus in einer ersten dreidimensionalen Ansicht.
- Figur 7: zeigt die erste Ausführungsform des erfindungsgemässen Pulverzentrums in einer zweiten dreidimensionalen Ansicht.
- Figur 8: zeigt das erfindungsgemässe Pulverzentrum in der Draufsicht.
- Figur 9: zeigt das erfindungsgemässe Pulverzentrum in einer ersten Seitensicht.
- Figur 10: zeigt einen Teil des erfindungsgemässen Pulverzentrums mit der Siebreinigungsvorrichtung von der Seite in einer vergrösserten Ansicht im Schnitt.
- Figur 11: zeigt einen weiteren Teil des erfindungsgemässen Pulverzentrums mit der Behälterreinigungseinrichtung von der Seite in einer vergrösserten Ansicht im Schnitt.
- Figur 12: zeigt das erfindungsgemässe Pulverzentrum im Reinigungsmodus in einer ersten dreidimensionalen Ansicht.
- Figur 13: zeigt das erfindungsgemässe Pulverzentrum im Reinigungsmodus in einer zweiten dreidimensionalen Ansicht.
- Figur 14: zeigt das erfindungsgemässe Pulverzentrum im Reinigungsmodus in der Draufsicht.
- Figur 15: zeigt eine mögliche Ausführungsform einer Frischpulverstation in einer dreidimensionalen Ansicht.
- Figur 16: zeigt die Frischpulverstation in der Ansicht von vorne.
- Figur 17: zeigt die Frischpulverstation in der Seitenansicht im Schnitt.
- Figur 18: zeigt die Frischpulverstation in der Draufsicht im Schnitt.

### Wege zur Ausführung der Erfindung

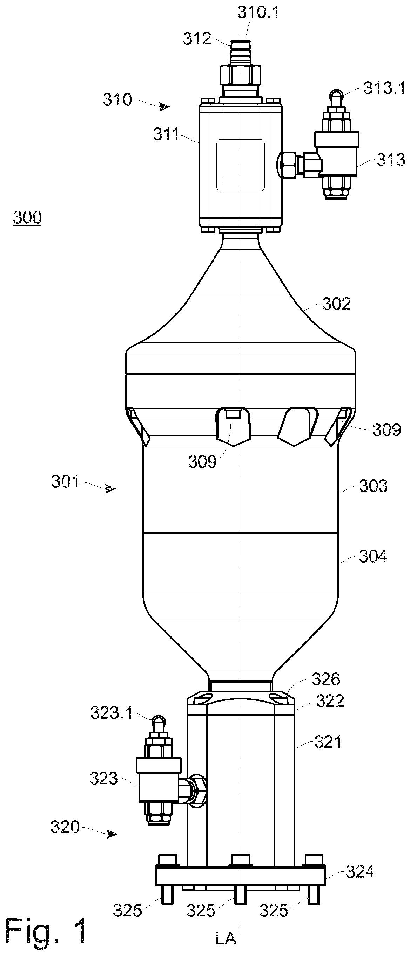

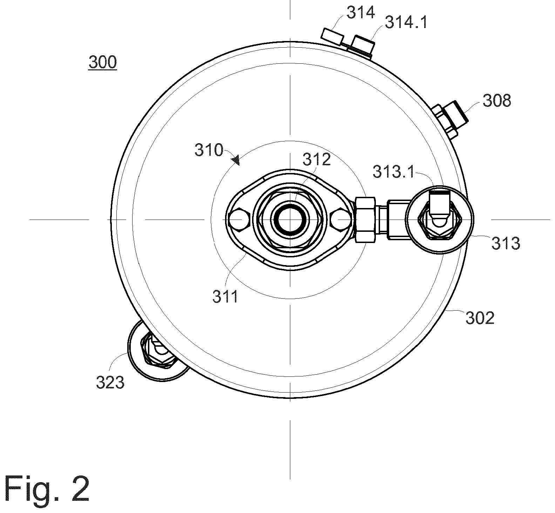

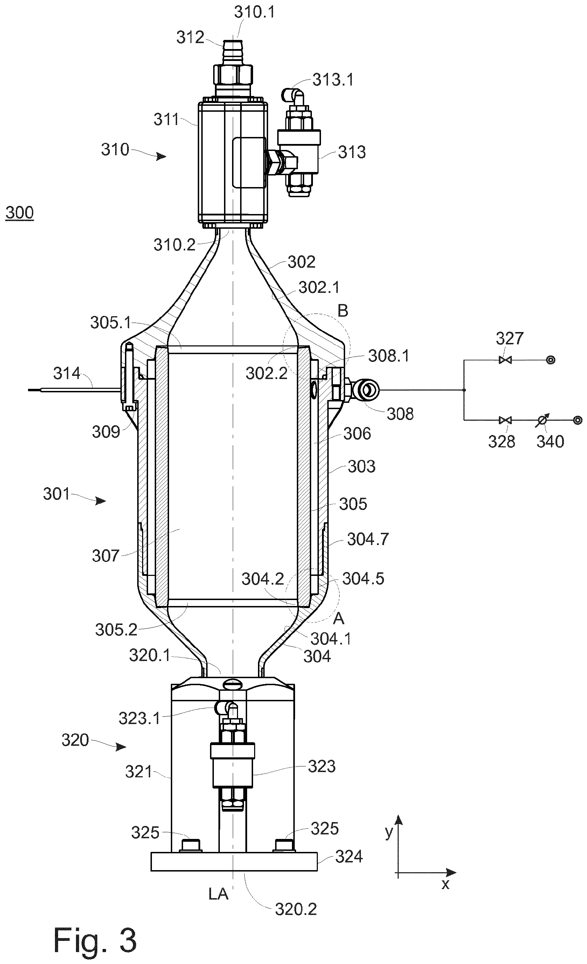

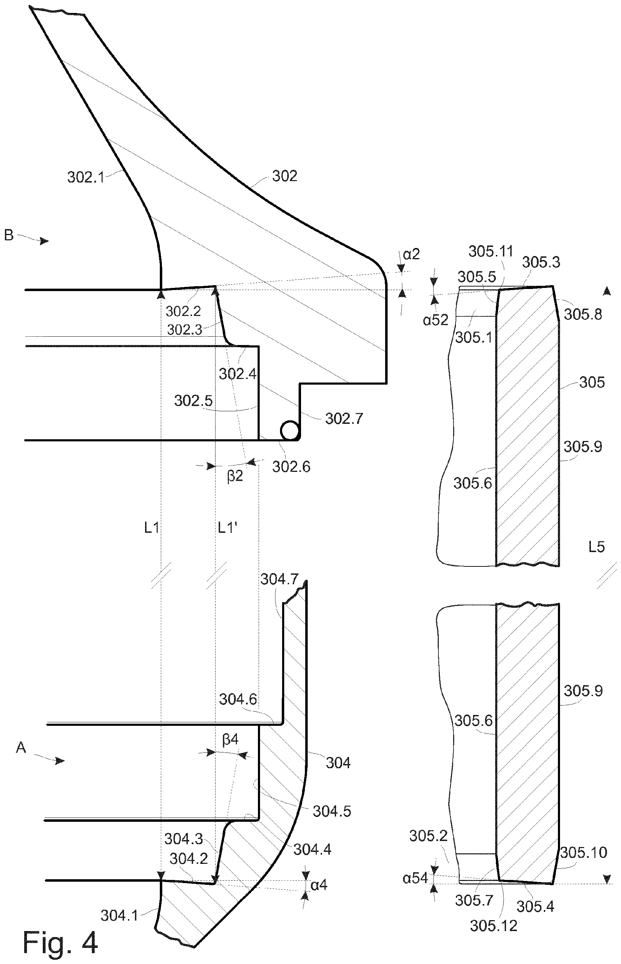

Figur 1 zeigt eine erste mögliche Ausführungsform des erfindungsgemässen Pulverförderers 300 zum Fördern von Beschichtungspulver in der Seitenansicht. In Figur 2 ist der Pulverförderer 300 in der Draufsicht dargestellt. Figur 3 zeigt den Pulverförderer 300 im Längsschnitt. Figur 4 zeigt die Details A und B aus Figur 3 sowie einen Teil des Rohrs 305 des erfindungsgemässen Pulverförderers 300 im Längsschnitt. Das mit dem Pulverförderer 300 förderbare Pulver kann zum Beispiel Frischpulver oder rezykliertes Pulver sein.

Der Pulverförderer 300 weist eingangsseitig ein Pulvereinlassventil 310 mit einem Pulvereinlass 310.1 auf. Wenn das Pulvereinlassventil 310 geöffnet ist, kann Pulver in einen sich an das Pulvereinlassventil 310 anschliessenden Behälter 301 gesaugt oder gepumpt werden. Der Behälter 301 wird im Folgenden auch als Zwischenbehälter bezeichnet. Er weist ein Behältergehäuse oder kurzum Gehäuse mit einem Gehäuseoberteil 302, einem Gehäusemittelteil 303 und einem Gehäuseunterteil 304 auf.

Das Pulvereinlassventil 310 kann als Quetsche ausgebildet sein. Um das Pulvereinlassventil 310 zu öffnen, wird der Steueranschluss 313.1 des Ventils 313 druckfrei geschaltet. Das Ventil 313 ist vorzugsweise als Schnellentlüftungsventil ausgebildet. Damit kann bei Bedarf der Druck im Pulvereinlassventil 311 schneller abbaut und dessen Ventilöffnungszeit verkürzt werden.

Der Pulverförderer 300 weist ausgangsseitig ein Pulverauslassventil 320 mit einem Pulvereinlass 320.1 und einem Pulverauslass 320.2 auf. Das Pulverauslassventil 320 kann als Quetsche ausgebildet sein. Um das Pulverauslassventil 320 zu öffnen, wird der Steueranschluss 323.1 des Ventils 323 druckfrei geschaltet. Wie das Ventil 313 kann auch das Ventil 323 als Schnellentlüftungsventil ausgebildet sein. Damit kann bei Bedarf der Druck im Pulverauslassventil 320 schneller abbaut werden.

Wie in den Figuren 3 und 4 dargestellt, hat das Gehäuseoberteil 302 eine trichterförmige Innenseite 302.1. Die trichterförmige Kontur hilft, das in den Zwischenbehälter 301 strömende Pulver zu kanalisieren, ohne dass es an der Innenwand des Gehäuseoberteils 302 anhaftet. Im unteren Bereich schliesst sich an die trichterförmige Innenseite 302.1 ein Absatz 302.2 an, der im Folgenden auch als oberer Absatz bezeichnet wird. Der Absatz 302.2 ist eine ringförmige Fläche, die gegenüber der Horizontalen leicht schräg verläuft. Der Winkel α2 zwischen der Horizontalen und der schrägen Fläche 302.2 liegt zwischen 1° und 7°. Vorzugsweise beträgt der Winkel α2 = 4°.

Die Winkel α2 und α4 sind so gewählt, dass der Abstand L1 zwischen dem oberen Absatz 302.2 und dem unteren Absatz 304.2 zur Längsachse LA des Behälters 301 hin abnimmt. Das heisst der Abstand L1 ist kleiner als der Abstand L1'. Dadurch wird erreicht, dass die Enden 305.1 und 305.2 des Rohrs 305 nicht nach innen gedrückt werden oder sich undefiniert verformen (z.B. oval und undicht werden), wenn das Rohr 305 zwischen dem oberen und dem unteren Absatz 302.2 und 304.2 eingespannt wird. Es wird sichergestellt, dass sich im Bereich des Absatzes 302.2, und zwar am Übergang zwischen dem oberen Rohrende 305.1 und der trichterförmigen Innenwand 302.1 des Gehäuseoberteils kein Absatz, Versatz oder Fuge bildet und sich dort also auch kein Pulver ablagern kann. Das Gleiche gilt sinngemäss auch für den Übergang zwischen dem unteren Rohrende 305.2 und der trichterförmigen Innenwand 304.1 am Gehäuseunterteil.

An den Absatz 302.2 schliesst sich eine etwas von der Vertikalen abweichende Innenwand 302.3 an. Der Winkel β2, in dem die Innenwand 302.3 von der Vertikalen abweicht, liegt zwischen 5° und 15°. Vorzugsweise beträgt der Winkel β2 = 10°.

Wenn das Rohr 305 mit seinem oberen Ende 305.1 in Richtung des Absatzes 302.2 geschoben wird, bildet die Seitenwand 302.3 eine sich nach oben hin verjüngende Führung und wirkt so als Zentrierungshilfe für das Rohr 305. An die Seitenwand 302.3 schliesst sich ein weiter Absatz 302.4 und daran wiederum eine weitere Seitenwand 302.5 an.

Das untere Ende des Gehäuseoberteils 302 ist als runder Stutzen 302.7 ausgebildet. Auf diesen eine Dichtung tragenden Stutzen 302.7 ist das Gehäusemittelteil 303 gesteckt. Mit Hilfe mehrerer Schrauben 309 kann das Gehäusemittelteil 303 mit dem Gehäuseoberteil 302 verschraubt werden. Das untere Ende des Gehäusemittelteils 303 steckt in einer ringförmigen Aufnahme des Gehäuseunterteils 304.

Das Gehäuseunterteil 304 weist ebenso wie das Gehäuseoberteil 302 eine trichterförmige Innenseite 304.1 auf. Die trichterförmige Kontur hilft, das im Zwischenbehälter 301 befindliche Pulver zum Auslass 320.1 hin zu kanalisieren, ohne dass es an der Innenwand 304.1 des Gehäuseunterteils 304 anhaftet. Im oberen Bereich schliesst sich an die trichterförmige Innenseite 304.1 ein Absatz 304.2 an. Der Absatz 304.2 wird im Folgen auch als unterer Absatz bezeichnet und ist eine ringförmige Fläche, die gegenüber der Horizontalen leicht schräg verläuft. Der Winkel α4 zwischen der Horizontale und der schrägen Fläche 304.2 liegt zwischen 1° und 7°. Vorzugsweise beträgt der Winkel α4 = 4°.

Wenn das Rohr 305 mit seinem unteren Ende 305.2 in Richtung des unteren Absatzes 304.2 geschoben wird, bildet die Seitenwand 304.3 eine sich nach unten hin verjüngende Führung und wirkt so als Zentrierungshilfe für das Rohr 305. An die Seitenwand 304.3 schliesst sich ein weiter Absatz 304.4 und daran wiederum eine weitere Seitenwand 304.5 an.

Die Seitenwand 304.5 ist wie die Seitenwand 302.5 von der Aussenseite 305.9 des Rohrs 305 beabstandet, sodass zwischen den Seitenwänden 302.5, 304.5 und der Aussenseite 305.9 ein Freiraum 306 entsteht. Die Aussenseite 305.9 liegt in dem Bereich zwischen den horizontalen Flächen 302.4 und 304.4 nirgendwo an, sodass dieser Abschnitt der Aussenseite 305.9 genutzt werden kann, um Luft durch das semipermeable Rohr 305 hindurchtreten zu lassen.

Das obere Ende des Gehäuseunterteils 304 ist vorzugsweise als runder Stutzen 304.7 ausgebildet und bildet eine Aufnahme für den unteren Abschnitt des Gehäusemittelteils 303. Der untere Abschnitt des Gehäusemittelteils 303 steckt in der Aufnahme kann mit dieser verklebt sein. Dadurch wird auf einfache Weise eine sichere und dichte Verbindung zwischen dem Gehäusemittelteil 303 und dem Gehäuseunterteil 304 geschaffen. Die beiden Gehäuseteile 303 und 304 können auch über Gewinde (in den Figuren nicht gezeigt) miteinander verschraubt sein. Die Schraubverbindung kann mit einem entsprechenden Kleber und/oder mit einer Dichtung, z.B. einem O-Ring, abgedichtet werden. Stattdessen können das Gehäusemittelteil 303 und das Gehäuseunterteil 304 auch aus einem Teil gefertigt sein. Dies hat den Vorteil, dass keine Verbindung mehr zwischen dem Gehäusemittelteil 303 und dem Gehäuseunterteil 304 vorhanden ist und somit dort auch die Abdichtung entfällt.

### Herstellung und Montage

Das Rohr 305 hat als Halbzeug zunächst eine zylindrische Form ohne Verjüngungen an den Enden 305.1 und 305.2. Um die Enden 305.1 und 305.2 in die gewünschte Form zu bringen (siehe Figur 4) wird es in einem ersten Schritt zumindest im Bereich der Enden 305.1 und 305.2 erwärmt. Mit einem Werkzeug werden nun die Rohrenden 305.1 und 305.2 des erwärmten und dadurch weicheren Rohrs 305 so umgeformt, dass die Stirnseiten 305.3 und 305.4 des Rohrs 305 schräg verlaufen und jeweils Fasen aufweisen. Dabei kann das obere Rohrende 305.1 sowohl innen als auch aussen eine Fase 305.5 und 305.8 erhalten. Auch das untere Rohrende 305.2 kann sowohl innen als auch aussen eine Fase 305.7 und 305.10 erhalten.

Der Winkel der Fase 305.8 ist vorzugsweise so gewählt, dass er dem Winkel β2 der Seitenfläche 302.3 entspricht. Auch der Winkel der Fase 305.10 ist vorzugsweise so gewählt, dass er dem Winkel β4 der Seitenfläche 304.3 entspricht.

Der Winkel α52 der Stirnfläche 305.3 ist vorzugsweise so gewählt, dass er gleich dem Winkel α2 des Absatzes 302.2 ist, wenn das Rohr 305 in das Gehäuse 301 eingebaut ist. Bevor das Rohr 305 eingebaut ist, ist der Winkel α52 der Stirnfläche 305.3 vorzugsweise kleiner als der Winkel α2. Das Gleiche gilt sinngemäss auch für den Winkel α54 der Stirnfläche 305.4. Der Winkel α54 ist vorzugsweise so gewählt, dass er gleich dem Winkel α4 des Absatzes 304.2 ist, wenn das Rohr 305 in das Gehäuse 301 eingebaut ist. Bevor das Rohr 305 eingebaut ist, ist der Winkel α54 der Stirnfläche 305.4 vorzugsweise kleiner als der Winkel α4.

Das Rohr 305 wird vorzugsweise im Gehäuse 301 zwischen den beiden Absätzen 302.2 und 304.2 mit einer so grossen Kraft eingespannt, sodass die obere Innenkante 305.11 und die untere Innenkante 305.12 des Rohrs 305 sich verformen und sich an die Neigung der Absätze 302.2 und 304.2 anpassen. Dies hat den Vorteil, dass jegliche Fugen zwischen dem Absatz 302.2 und der Stirnfläche 305.3 beziehungsweise dem Absatz 304.2 und der Stirnfläche 305.4 vermieden beziehungsweise eliminiert werden.

Damit passen die Winkel α52 und α54 der Stirnflächen 305.3 und 305.4 des Rohrs 305 zu den Winkeln α2 und α4 der schrägen Absätze 302.2 und 304.2. Wenn das Rohr 305 in das Gehäuse eingebaut ist, passen die Stirnflächen 305.3 und 305.4 des Rohrs 305 formschlüssig in das Gehäuseoberteil 302 beziehungsweise das Gehäuseunterteil 304.

Die Verformung des Rohrs 305 erfolgt vorzugsweise mittels Druck. Durch die pressende Verformung wird das Material am oberen Rohrende 305.1 und am unteren Rohrende 305.2 verdichtet. Dies hat den Vorteil, dass das Rohr 305 robuster wird.

Zur Montage wird das Rohr 305 zwischen dem Gehäuseoberteil 302 und dem Gehäuseunterteil 304 eingespannt. Mit Hilfe der Schrauben 309 kann nun der Gehäuseoberteil 302 mit dem Gehäusemittelteil 303 verschraubt werden. Das Rohr 305 ist nun zwischen den beiden leicht schrägen Flächen 302.2 und 304.2 eingespannt und formschlüssig fixiert.

Wenn der Pulverförderer 300 in einem Bereich mit erhöhter Explosionsgefahr eingesetzt werden soll, kann am Pulverförderer eine Erdung vorgesehen sein. Das Erdungskabel 314 kann mit einer Schraube am Erdungsanschluss 314.1 mit dem Pulverförderer 300 elektrisch verbunden sein. Der Erdungsanschluss 314.1 kann sich zum Beispiel am Gehäusemittelteil 302 befinden.

Im Folgenden wird die Betriebsweise des Pulverförderers 300 weiter erläutert. Es wird angenommen, dass der Zwischenbehälter 301 anfänglich frei von Pulver ist. In einem ersten Schritt werden die Ventile 310 und 320 geschlossen, sodass weder Pulver in den Zwischenbehälter 301 gelangt, noch dass Pulver aus dem Zwischenbehälter 301 heraustransportiert wird. Nun wird das Vakuumventil 327 geöffnet, um im Zwischenbehälter 301 einen Unterdruck zu erzeugen. Dabei wird die Luft aus dem Zwischenbehälter 301 durch die luftdurchlässigen Poren des Rohrs 305 abgesaugt. Sobald das Pulvereinlassventil 310 geöffnet wird, wird Pulver in den Zwischenbehälter 301 gesaugt. Es braucht nicht abgewartet zu werden bis ein bestimmter Unterdruck im Zwischenbehälter 301 aufgebaut ist. Das Pulvereinlassventil 310 kann jederzeit geöffnet werden, also kurz vor dem Öffnen des Vakuumventils 327, gleichzeitig mit dem Vakuumventil 327 oder auch nachdem das Vakuumventil 327 geöffnet wurde. Wenn sich in der Pulverkammer 307 des Zwischenbehälters 301 ausreichend Pulver angesammelt hat, werden das Vakuumventil 327 und das Pulvereinlassventil 310 wieder geschlossen. Ein solcher Ansaugvorgang kann zum Beispiel 6 Sekunden dauern. Anschliessend wird das Auslassventil 320 geöffnet, sodass das Pulver aus dem Zwischenbehälter 301 herausströmen kann. Dies kann unter Ausnutzung der Schwerkraft geschehen. Um den Pulvertransport aus dem Zwischenbehälter 301 zu unterstützen, kann Druckluft über den Anschluss 308 und die Öffnung 308.1 in den Zwischenbehälter 301 geblasen werden. Dazu wird das Ventil 328 geöffnet. Die Druckluft gelangt zunächst über den Anschluss 308 und die Öffnung 308.1 in den Raum 306. Anschliessend strömt sie durch das semipermeable Rohr 305 in die Pulverkammer 307. Die Druckluft hilft bei jedem Förderzyklus die Innenwand 305.6 des Rohrs zu reinigen.

Der Pulverförderer 300 ist ausgelegt, um Pulvermengen von vorzugsweise ca. 1 Liter (0.3 - 1.5 Liter) pro Zyklus zu fördern. Ein solcher Förderzyklus kann zum Beispiel rund 5 bis 20 Sekunden dauern, typischerweise 10 bis 12 Sekunden.

Der Anschluss 308 kann sich, wie in Figur 3 gezeigt, im Gehäusemittelteil 303 befinden. Über die Öffnung 308.1, die im Gehäusemittelteil 303 als Durchgangsloch ausgebildet ist, ist der Anschluss 308 mit dem Raum 306 verbunden.

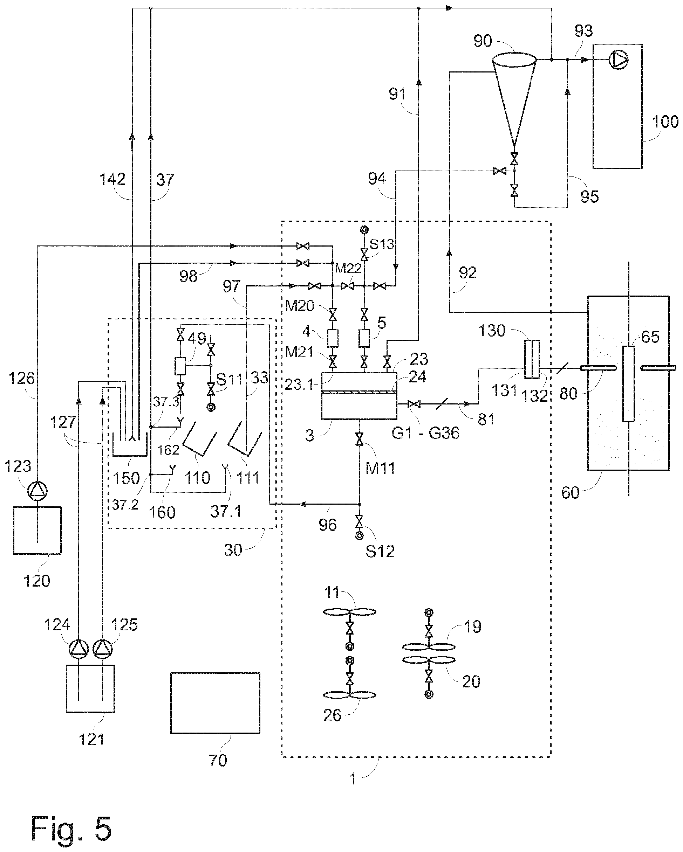

Der Pulverförderer 300 kann, wie in Figur 5 gezeigt, als Pulverförderer 4 mit einem Arbeitsbehälter 3, 23 verbunden, um ihn mit Pulver zu versorgen. Da der Arbeitsbehälter 3, 23 während des Förderbetriebs dauerhaft unter Druck steht, ist es von Vorteil, wenn der Druck im Zwischenbehälter 301 grösser oder zumindest genauso gross ist wie der Druck im Arbeitsbehälter 3, 23. Zum Einstellen des Drucks im Zwischenbehälter 301 kann ein Druckregelventil 340 verwendet werden. Sobald das Pulver aus dem Zwischenbehälter 301 herausgeströmt ist, werden das Auslassventil 320 und das Ventil 328 wieder geschlossen. Anschliessend kann der Zwischenbehälter 301 erneut auf die oben beschriebene Weise mit Pulver befüllt werden.

Der Pulverförderer 300 kann einen Flansch 324 aufweisen. Der Flansch 324 und die Schrauben 325 dienen dazu den Pulverförderer 300 mit einem weiteren Bauteil verbinden zu können.

Der oben beschriebene Pulverförderer 300 kann in einer Pulverbeschichtungsanlage an verschiedenen Stellen zum Einsatz kommen. Figur 5 zeigt in einem schematischen Blockschaltbild eine mögliche Ausführungsform einer Pulverbeschichtungsanlage mit mehreren der erfindungsgemässen Pulverförderer 300. Drei solche Pulverförderer 300 sind in der Pulverbeschichtungsanlage als Pulverförderer 4, 5 und 49 bezeichnet. Wenn im Folgenden vom Pulverförderer 4 die Rede ist, ist damit die Gesamtheit aus Zwischenbehälter 4 im engeren Sinn, Einlassventil M20 und Auslassventil M21 gemeint. Das Gleiche gilt sinngemäss auch für den Pulverförderer 5.

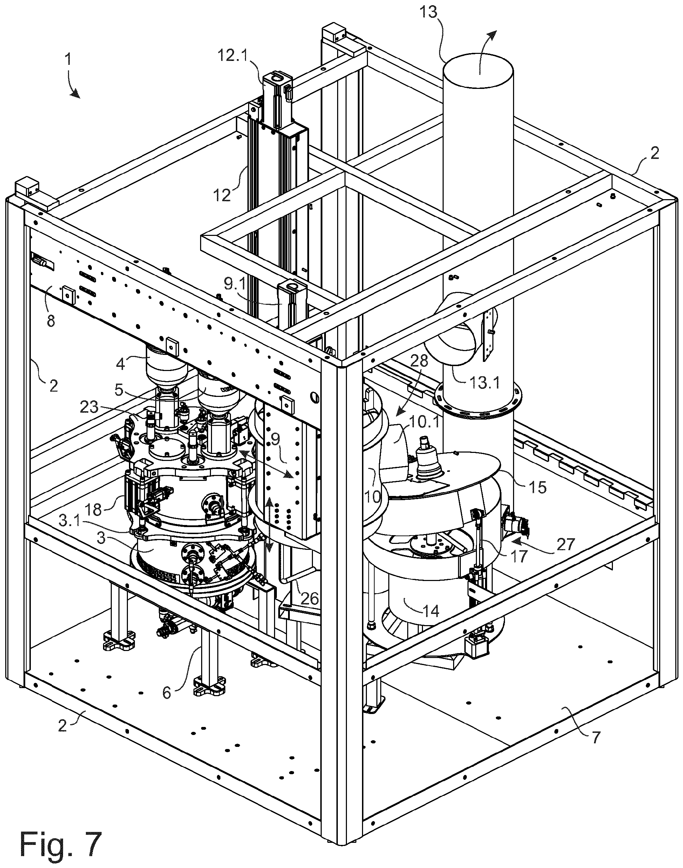

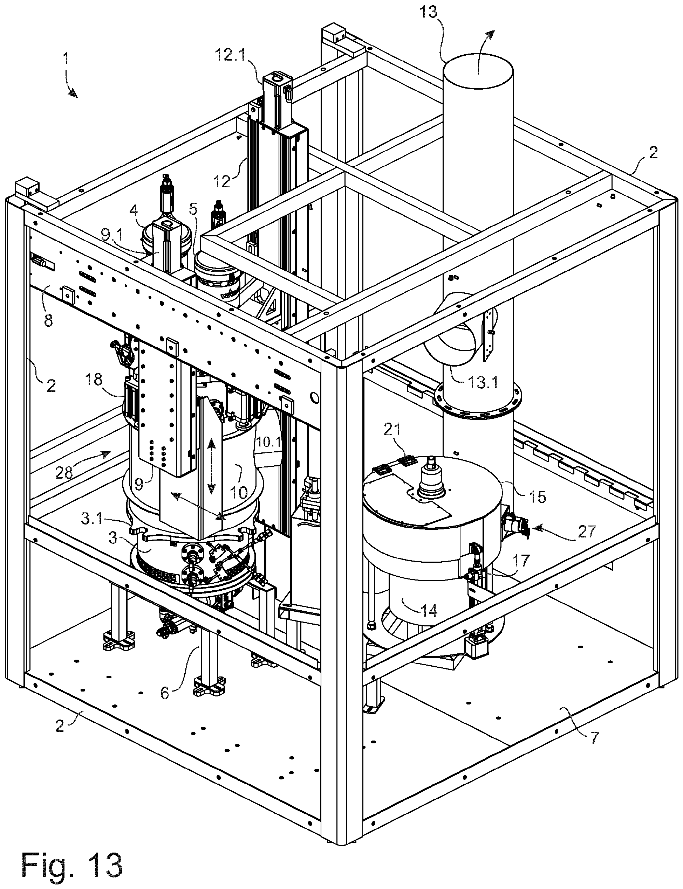

Im Folgenden wird der Aufbau der gesamten Pulverbeschichtungsanlage anhand der Figuren 5 bis 18 weiter erläutert.

Das Pulverzentrum 1, das auch als Pulverversorgungsvorrichtung, Pulver-Center oder integriertes Pulvermanagement-System bezeichnet wird, umfasst einen Pulvervorratsbehälter 3, der zur Aufbewahrung des Beschichtungspulvers dient. Zudem umfasst das Pulverzentrum 1 eine Pulverfördervorrichtung, mit der das Pulver aus dem Pulvervorratsbehälter 3 herausgefördert und zu einem Pulverapplikator 80 transportiert wird. Die Pulverfördervorrichtung ist im vorliegenden Fall in den Pulvervorratsbehälter 3 integriert und wird später noch eingehender erläutert. Der Pulverapplikator 80 (siehe Figur 5) kann als manuelle oder automatische Pulversprühvorrichtung ausgebildet sein und weist an seinem zum Werkstück 65 hin gerichteten Auslass eine Sprühdüse oder einen Rotationszerstäuber auf.

Das Pulverzentrum 1 ist als Modul aufgebaut. Dadurch kann das Pulverzentrum 1 schnell und einfach als kompakte Einheit transportiert werden. Die einzelnen Komponenten des Pulverzentrums 1 sind an Rahmenprofilen 2 befestigt, die beispielsweise aus Aluminium oder Stahl sein können. Die Rahmenprofile 2 bilden die äußere Begrenzung des Pulverzentrums 1. Bei Bedarf kann das Pulverzentrum 1 einen Boden 7 aufweisen.

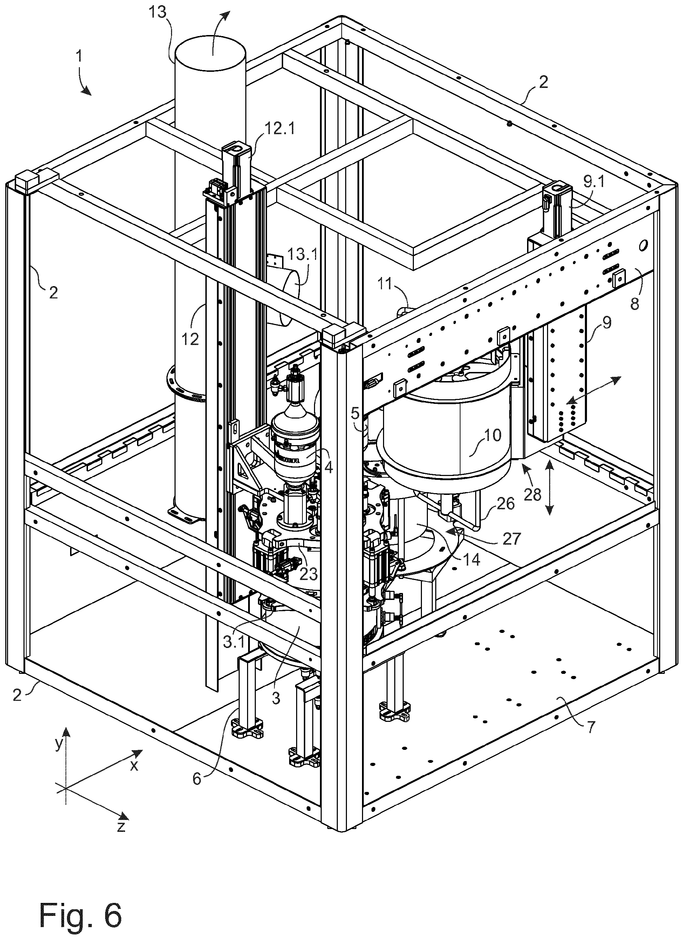

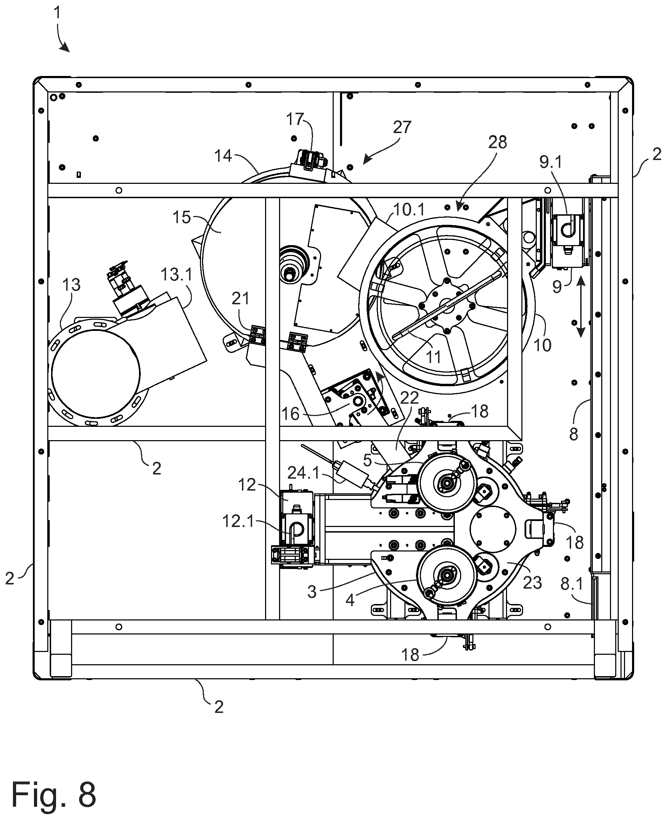

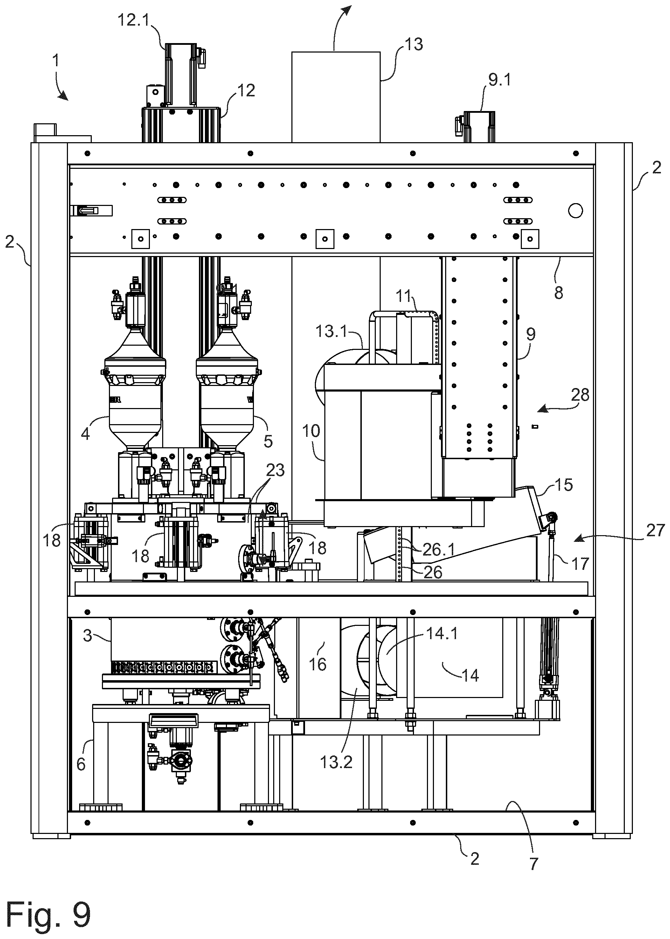

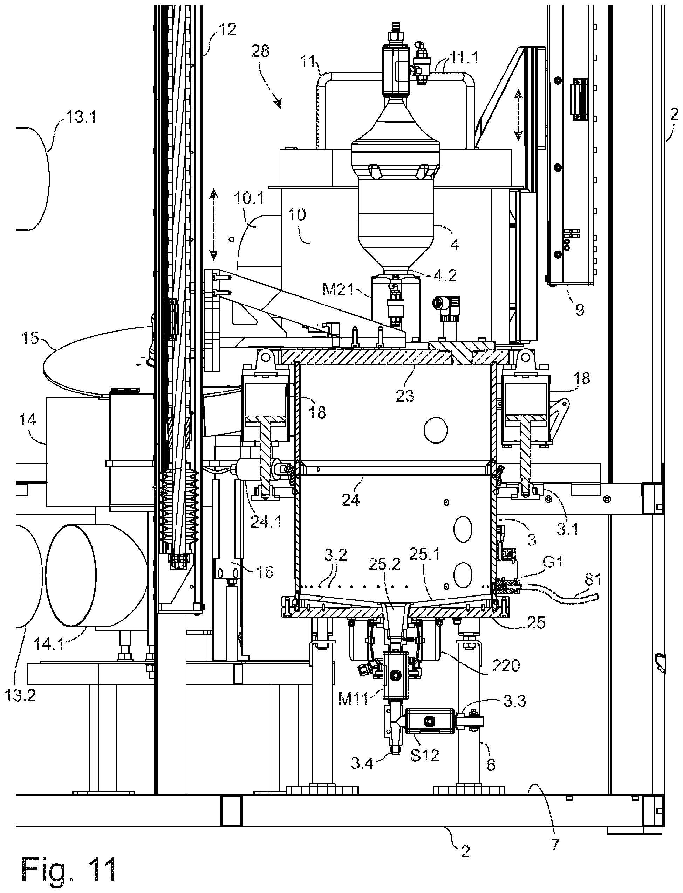

Der Pulvervorratsbehälter 3 des Pulverzentrums 1 kann beispielsweise auf einem Sockel 6 angeordnet sein. Wie zum Beispiel in Figur 11 gezeigt, kann während des Förderbetriebs der Pulvervorratsbehälter 3 mit einem Pulverbehälterdeckel 23 abgeschlossen sein. Bei der in den Figuren 6 bis 14 gezeigten Ausführungsform hat der Pulverbehälterdeckel 23 die Form eines umgedrehten Topfes. Mithilfe pneumatischer Verriegelungen 18 kann der Pulverbehälterdeckel 23 mit dem Pulvervorratsbehälter 3 dicht abgeschlossen werden. Der Pulvervorratsbehälter 3 weist dazu Dichtungen und Verriegelungsaufnahmen 3.1 auf, in die entsprechend ausgebildete Gegenstücke der pneumatischen Verriegelung 18 eingreifen können. Die pneumatische Verriegelung 18 kann beispielsweise mit einem Zylinder, einem Kolben und einer Kolbenstange ausgestattet sein. Wenn die untere Kammer des Zylinders mit Druckluft beaufschlagt wird, werden der Kolben und damit auch die Kolbenstange nach oben gedrückt. Die am unteren Ende der Kolbenstange befindliche Klaue greift in die Verriegelungsaufnahme 3.1 ein und bewirkt, dass der Pulverbehälterdeckel 23 auf den Pulvervorratsbehälter 3 gedrückt wird. Bei einer Ausführungsform sind drei derartige Verriegelungen 18 vorhanden (zum Beispiel in den Figuren 8 und 9 gezeigt). Die Anzahl der Verriegelungen 18 und deren Aufbau kann ohne weiteres an die jeweiligen Bedürfnisse angepasst werden.

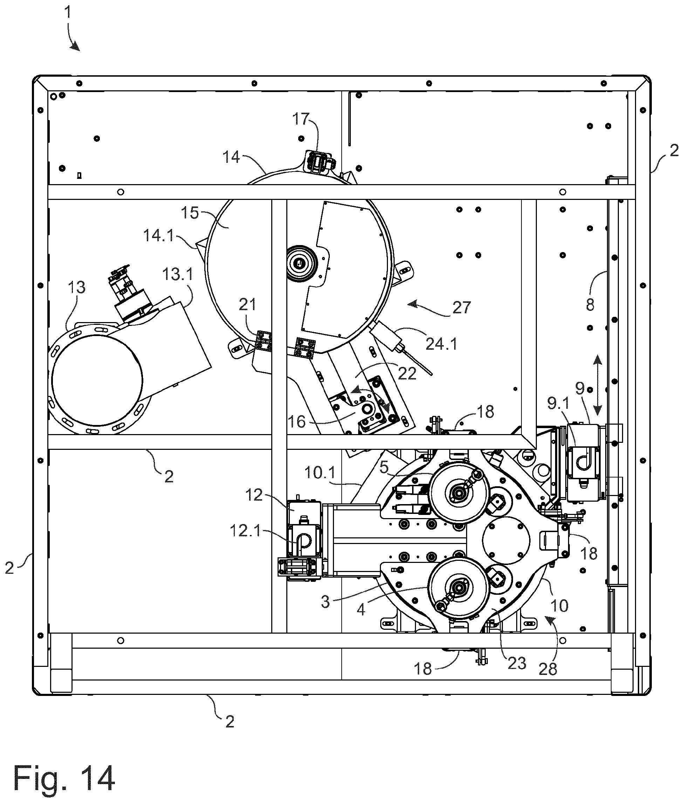

Im Inneren des Pulvervorratsbehälters 3 befindet sich ein Sieb 24, das als Ultraschallsieb ausgebildet sein kann. Der Ultraschallwandler 24.1 des Siebs 24 befindet sich vorzugsweise außerhalb des Pulvervorratsbehälters 3. Wird der Pulverbehälterdeckel 23 abgenommen, ist das Sieb 24 zugänglich und kann herausgenommen werden. Damit dies automatisch geschehen kann, ist das Ultraschallsieb 24 über einen Tragarm 22 an einem Schwenkmechanismus 16 befestigt. Das Sieb 24 kann mithilfe des Schwenkmechanismus 16 aus der Arbeitsposition (siehe Figur 8) heraus geschwenkt und in eine Reinigungsposition in einer Reinigungsstation 27 gebracht werden (siehe Figur 14). Die Reinigungsstation 27 wird im Folgenden auch als Siebreinigungsvorrichtung oder Sieb-Reinigungsstation bezeichnet.

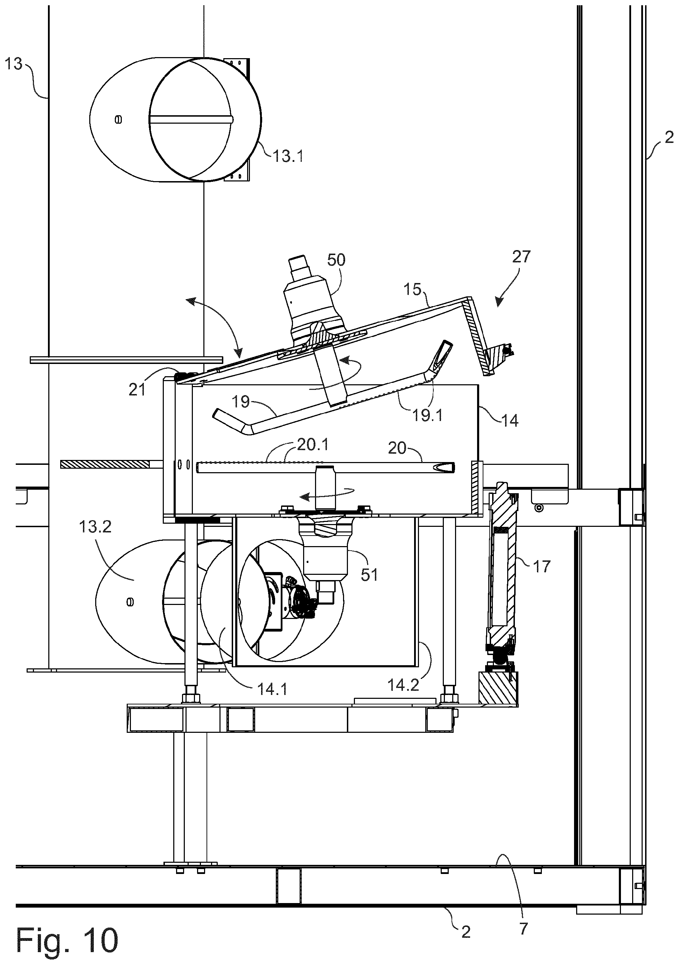

Wie in Figur 10 gezeigt ist, befindet sich im Inneren der Reinigungsstation 27 ein drehbar gelagerter Reinigungsarm 20. Der Reinigungsarm 20 weist eine Vielzahl von Reinigungsdüsen 20.1 auf, die auf der Oberseite des Reinigungsarms 20 angeordnet sind. Die Reinigungsstation 27 umfasst zudem einen Deckel 15, der zum Beispiel mit Hilfe eines Pneumatikzylinders 17 geöffnet und geschlossen werden kann. Der Deckel 15 wird dabei um ein Scharnier 21 geschwenkt. Ein gekrümmter Doppelpfeil deutet die Schwenkbewegung an. Auf dessen Unterseite trägt der Deckel 15 einen Reinigungsarm 19, der ebenfalls mit einer Vielzahl von Reinigungsdüsen 19.1 ausgestattet ist. Die Reinigungsdüsen 19.1 befinden sich vorzugsweise auf der Unterseite des Reinigungsarms 19. Sie sind so ausgerichtet, dass sie während des Reinigungsbetriebs Druckluft nach unten auf das unter dem Reinigungsarm 19 befindliche Ultraschallsieb 24 blasen. Der obere Reinigungsarm 19 ist mit einem Lager 50 am Deckel 15 drehbar gelagert. Der untere Reinigungsarm 20 ist über ein Lager 51 an der Reinigungsbehälter 14 drehbar gelagert. Die beiden Lager 50 und 51 können auch als Luftmotoren ausgebildet sein. Die Drehrichtung des oberen Reinigungsarms 19 und die Drehrichtung des unteren Reinigungsarms 20 ist jeweils mit einem Pfeil gekennzeichnet. Der Drehsinn des Reinigungsarms ergibt sich aus der versetzten Anordnung der Reinigungsdüsen und dem Rückstoss, der entsteht, wenn Druckluft durch die Düsen ausströmt. Während des Reinigungsbetriebs befindet sich das Ultraschallsieb 24 zwischen dem unteren Reinigungsarm 20 und den oberen Reinigungsarm 19.

Der Reinigungsarm 19 kann an beiden Enden (wie in Figur 10 gezeigt) angewinkelt sein, so dass er einen horizontalen Schenkel und zwei schräg nach oben gerichtete Schenkel hat. Die Druckluftdüsen 19.1 können sich sowohl auf dem horizontalen Schenkel als auch auf den schräg nach oben gerichteten Schenkeln befinden. Der Reinigungsarm 19 kann als Rohr ausgebildet sein, um die Druckluft im Inneren des Rohrs zu den Druckluftdüsen 19.1 zu führen. Sinngemäss das Gleiche gilt für den unteren Reinigungsarm 20, auch wenn in Figur 10 die Enden des unteren Reinigungsarms 20 nicht angewinkelt sind.

Auf der Unterseite des Behälters 14 zur Aufnahme des Siebs 24 befindet sich ein unterer Behälterabschnitt 14.2 mit einem Auslass 14.1. Über den Auslass 14.1 kann das in der Reinigungsstation 27 befindliche Pulver-Luft-Gemisch abgesaugt werden. Dazu ist der Auslass 14.1 über einen in den Figuren nicht gezeigten Schlauch mit einer Einlassöffnung 13.2 eines Absaugrohrs 13 verbunden. Das Pulver-Luft-Gemisch kann über das Absaugrohr 13 und eine Absaugleitung 91 in einen Nachfilter 100 gesaugt werden.

Der Pulvervorratsbehälter 3 und dessen Pulverbehälterdeckel 23 werden im Folgenden auch Arbeitsbehälter 3, 23 bezeichnet. Der Pulvereinlass des Arbeitsbehälters 3, 23 befindet sich vorzugsweise in dessen oberen Bereich. Er kann zum Beispiel im Pulverbehälterdeckel 23 des Arbeitsbehälters 3, 23 angeordnet sein. Der Arbeitsbehälter 3, 23 kann auch mehrere Pulvereinlässe aufweisen. Der Pulvereinlass 23.1 ist über ein Pulver-Ventil M21, das beispielsweise als pneumatisch gesteuerte Quetsche ausgebildet ist, mit dem Pulverauslass 4.2 eines Zwischenbehälters 4 verbunden. Der Zwischenbehälter 4 dient zusammen mit dem Einlassventil M20 und dem Auslassventil M21 als Pulverförderer und ist in der Regel oberhalb des Arbeitsbehälters 3, 23 angeordnet. Auf diese Weise kann die Schwerkraft ausgenutzt werden, um im Zwischenbehälter 4 befindliches Pulver nach unten in den Arbeitsbehälter 3, 23 zu transportieren.

Oberhalb des Arbeitsbehälters 3, 23 kann ein zweiter Pulverförderer 5 angeordnet sein. Dessen Pulverauslass mündet ebenfalls in den Arbeitsbehälter 3, 23. Der zweite Pulverförderer 5 kann wie der erste Pulverförderer 4 aufgebaut sein.

Die in den Pulvervorratsbehälter 3 integrierte Pulverfördervorrichtung wird im Folgenden eingehender erläutert. Die Pulverfördervorrichtung kann, wie in der europäischen Patentanmeldung EP 3 238 832 A1 beschrieben, ausgebildet sein. Der Arbeitsbehälter 3, 23 ist so ausgebildet und betreibbar, dass er unter Druck setzbar ist. Mithilfe des Pulverförderers 4 kann Pulver aus der Frischpulverstation 30 herausgefördert und in den Arbeitsbehälter 3, 23 transportiert werden. Im Pulverbehälterdeckel 23, der den Pulvervorratsbehälter 3 oben abdeckt, ist dazu ein entsprechender Pulvereinlass vorhanden. Der Arbeitsbehälter 3, 23 weist im Bereich des Behälterbodens 25 einen Fluidisiereinsatz 25.1 zum Fluidisieren des Pulvers und eine Reihe von Pulverauslässen 3.2 auf. Es kann vorgesehen sein, dass an jeden der Pulverauslässe 3.2 jeweils ein Pulverauslassventil G1 - G36 angeschlossen ist. An jedes der Pulverauslassventile G1 - G36 wiederum ist jeweils eine Pulverleitung 81 angeschlossen. Jede der Pulverleitungen 81 weist zudem eingangsseitig, also in der Nähe des jeweiligen Pulverauslassventils G1 - G36, einen Einlass für Transportluft auf. Ausgangsseitig ist jede der Pulverleitungen 81 vorzugsweise über eine Kupplung 130 mit jeweils einem der Pulverapplikatoren 80 verbunden. Die zu fördernde Pulvermenge wird gesteuert, in dem mittels einer Steuerung 70 das jeweilige Pulverauslassventil G1 - G36 wiederholt geöffnet und geschlossen wird. Um Wiederholungen zu vermeiden, wird auf die oben genannte Patentanmeldung EP 3 238 832 A1 verwiesen, deren Inhalt hiermit Teil der vorliegenden Anmeldung ist.

Bei einer Ausführungsform des Arbeitsbehälters 3, 23 ist ein Rüttler 220 vorgesehen, der sich zum Beispiel unterhalb des Pulvervorratsbehälters 3 befinden kann (siehe Figur 11). Mit Hilfe der vom Rüttler 220 erzeugten Rüttelbewegungen kann das Pulver-Luftgemisch im Pulvervorratsbehälter 3 noch gleichmässiger fluidisiert werden. Zudem kann damit das Pulver-Luftgemisch noch optimaler aus dem Pulverauslasskanal 203 herausströmen.

Die Kupplung 130 weist dazu eine erste Gruppe von Anschlüssen 131 und einer zweiten Gruppe von Anschlüssen 132 auf. Mit der Steuerung 70 ist einstellbar, welcher Anschluss der ersten Gruppe 131 mit welchem Anschluss der zweiten Gruppe 132 verbunden ist. So kann jeweils eine der Pulverleitungen 81 ausgangsseitig mit jeweils einem Anschluss der ersten Gruppe 131 verbunden sein. An jeweils einen Anschluss der zweiten Gruppe 132 kann jeweils eine Pulverleitung angeschlossen sein, die andererseits mit jeweils einem der Pulverapplikatoren 80 verbunden ist.

Bei einer Ausführungsform kommen 36 Pulverauslassventile G1 - G36 zum Einsatz. Es können aber auch mehr oder weniger viele Pulverauslassventile verwendet werden. Die Anzahl der verwendeten Pulverauslassventile hängt von der Anzahl der eingesetzten Pulverapplikatoren 80 ab.

Alternativ zu der soeben beschriebenen integrierten Pulverfördervorrichtung mit dem Pulverauslassventil G1 kann auch ein Pulverinjektor, der nach dem Venturi-Prinzip arbeitet, oder eine Pulverpumpe zur Dichtstromförderung vorgesehen sein.

Statt des Pulverförderers 4 kann auch eine Pulverpumpe zur Dichtstromförderung, eine Schlauchpumpe oder ein Pulverinjektor vorgesehen sein. Sinngemäss das Gleiche gilt auch für den Pulverförderer 5.

Im Boden 25 des Pulvervorratsbehälters 3 befindet sich ein Pulverauslass 25.2, der über ein Ventil M11 mit dem Auslass 3.3 des Vorratsbehälters 3 verbunden ist. Über den Auslass 3.3 kann Restpulver, das sich noch im Pulvervorratsbehälter 3 befindet, mithilfe eines Pulverförderers 49 zurück zur Frischpulverstation 3 transportiert werden. Der Pulverförderer 49 kann dazu über einen in den Figuren nicht gezeigten Schlauch mit dem Auslass 3.3 des Vorratsbehälters 3 verbunden sein.

Der Pulvervorratsbehälter 3 und dessen Pulverbehälterdeckel 23 sowie die beiden Pulverförderer 4 und 5 sind an einer vertikalen Linearachse 12, die auch als Linearhubgerät bezeichnet wird, befestigt und können damit auf und ab bewegt werden. Der Antrieb 12.1 der Linearachse 12 kann sich oben an der Linearachse 12 befinden. Der vertikale Doppelpfeil in Figur 11 kennzeichnet dessen Bewegungsrichtung.

Das Pulverzentrum 1 umfasst daneben eine Behälterreinigungseinheit 28 oder kurzum Reinigungseinheit, die einen Reinigungsbehälter 10, einen oberen Reinigungsarm 11 und einem unteren Reinigungsarm 26 umfasst. Der obere Reinigungsarm 11 und der untere Reinigungsarm 26 sind im Reinigungsbehälter 10 drehbar gelagert und weisen jeweils eine Vielzahl von mit Druckluft betriebenen Reinigungsdüsen 11.1 beziehungsweise 26.1 auf. Der Reinigungsbehälter 10 ist an einem Linearhubgerät 9 befestigt und kann mit diesem vertikal nach oben und unten (in y-Richtung) bewegt werden. Der vertikale Doppelpfeil in Figur 11 kennzeichnet dessen Bewegungsrichtung. Der Antrieb 9.1 des Linearhubgeräts 9 kann sich oben am Linearhubgerät 9 befinden. Das Linearhubgerät 9 wiederum ist an einem horizontal ausgerichteten Linearantrieb 8 (auch Linearachse genannt) befestigt und kann mit diesem horizontal (in x-Richtung) hin und her bewegt werden. Der Antrieb 8.1 der Linearachse 8 kann seitlich an der Linearachse 8 angeordnet sein. Mit der Linearachse 8 ist es möglich, die Behälterreinigungseinheit 28 während des Förderbetriebs seitlich neben dem Arbeitsbehälter 3, 23 zu positionieren (siehe Figuren 6 bis 9). Während des Reinigungsbetriebs wird zuerst der Behälterdeckel 23 nach oben gefahren; dann kann die Behälterreinigungseinheit 28 mit Hilfe der beiden Linearantriebe 8 und 9 so positioniert werden, dass der Reinigungsbehälter 10 zuerst über den Pulvervorratsbehälter 3 gebracht und dann abgesenkt wird, und zwar so weit, sodass der Reinigungsarm 26 einen definierten Abstand zum Boden 25 des Pulvervorratsbehälters 3 aufweist. Der unten aus dem Reinigungsbehälter 10 herausragende Reinigungsarm 26 befindet sich dann im Inneren des Pulvervorratsbehälters 3 und dient zum Reinigen der Innenwand und des Bodens 25 des Pulvervorratsbehälters 3.

Mit Hilfe des Linearantriebs 12 kann der Pulverbehälterdeckel 23 so weit abgesenkt werden, dass mit dem oben aus dem Reinigungsbehälter 10 herausragenden Reinigungsarm 11 die Innenflächen des Pulverbehälterdeckels 23 abgeblasen und damit gereinigt werden können. Der Reinigungsarm 11 ragt dabei ins Innere des Pulverbehälterdeckels 23.

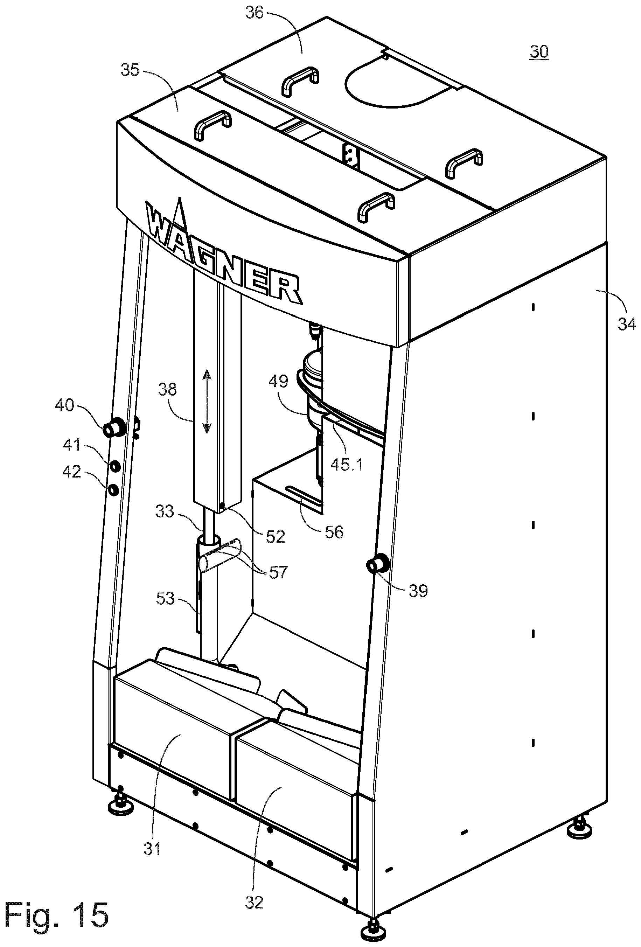

Eine mögliche Ausführungsform der Frischpulverstation 30 ist in den Figuren 15 bis 18 in verschiedenen Ansichten dargestellt.

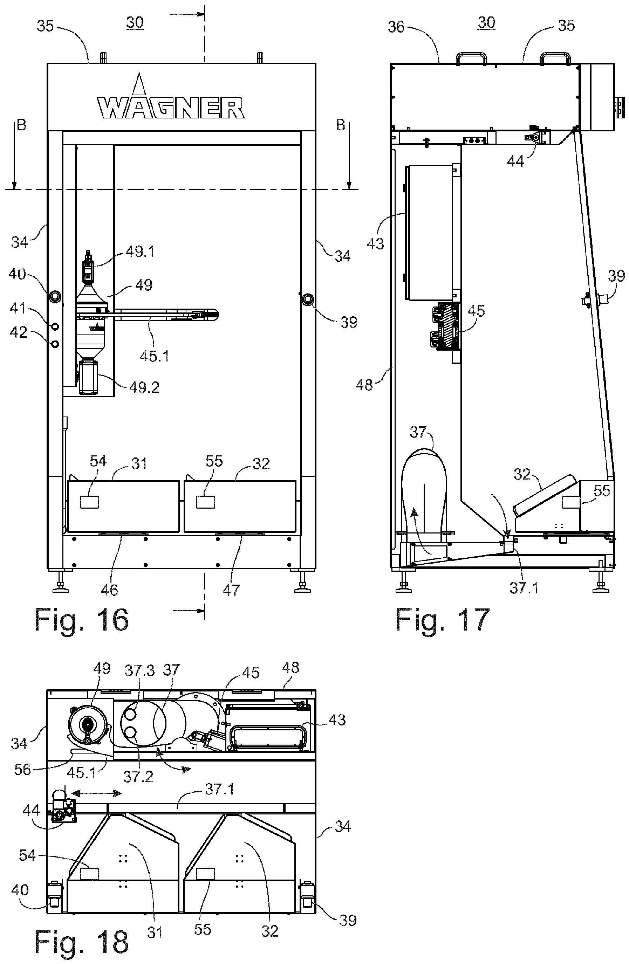

Die Frischpulverstation 30 kann beispielsweise als eigenständiges Modul ausgebildet sein. Die Station umfasst eine erste Stellfläche 31 und eine zweite Stellfläche 32, die jeweils einen Pulverkarton 110, 111 (siehe Figur 5) aufnehmen können. Die beiden Stellflächen 31 und 32 sind vorzugsweise schräg angeordnet, sodass das Pulver mit Unterstützung der Schwerkraft im Pulverkarton schräg nach unten in eine Ecke wandert. Damit kann der Pulverkarton ohne großen Aufwand restlos oder beinahe restlos mithilfe einer Sauglanze 33 entleert werden. Die Sauglanze 33 ist, wie in den Figuren 17 und 18 gezeigt, mithilfe eines Linearantriebs 44 horizontal beweglich, sodass sie sowohl für einen auf der ersten Stellfläche 31 angeordneten Pulverkarton als auch für einen auf der zweiten Stellfläche 32 angeordneten Pulverkarton verwendbar ist. Des Weiteren weist die Frischpulverstation 30 einen zusätzlichen Linearantrieb 38 auf, um die Sauglanze 33 auch vertikal bewegen zu können.

Unter der Stellfläche 31 für den Pulverkarton 110 befinden sich ein Rüttler 54 und eine Waage 46. Der Rüttler 54 dient dazu, das Pulver im Karton 110 in Bewegung zu versetzen, sodass es sich besser verteilt und in Richtung Sauglanze 33 fliesst.

Über die Waage 46 kann der Füllstand im Karton 110 bestimmt, und wenn der Füllstand unter ein bestimmtes Niveau fällt, ein Wechsel der Pulverkartons eingeleitet werden. Ausserdem kann über das von der Waage 46 erzeugte Messsignal erkannt werden, ob noch genügend Platz im Karton 110 ist, wenn Pulver über die Leitung 96 vom Pulverzentrum 1 zurück zur Pulverstation 30 gefördert werden soll.

Unter der Stellfläche 32 befinden sich ebenfalls ein Rüttler 55 und eine Waage 47. Deren Zweck entspricht sinngemäss dem Gleichen wie der Rüttler 54 und die Waage 46 bei der Stellfläche 31.

Um die Sauglanze 33 reinigen zu können, weist die Frischpulverstation 30 zusätzlich eine Reinigungsstation 52 auf, die mit einem Abstreifring und/oder Druckluftdüsen und/oder einer Absaugung ausgestattet ist. Damit kann die die Aussenseite der Sauglanze 33 während der Auf- und Abbewegung von dort anhaftendem Pulver befreit werden.

Zusätzlich können Luftdüsen 57 an der Reinigungsstation 53 angebracht sein, um den unteren Bereich der Sauglanze 33 zu reinigen. Wenn die Sauglanze 33 eine Fluidisierkrone aufweist, um das Pulver im Ansaugbereich zu fluidisieren, kann auch diese damit gereinigt werden.

Anstelle von zwei Stellflächen 31 und 32 mit zwei Pulverkartons 110 und 111, könnte auch nur eine Stellfläche 32 und ein Pulverbehälter 150 mit einer Fluidisiereinrichtung installiert sein. Mit zum Beispiel zwei Pumpen 124 und 125 kann Pulver über jeweils eine Pulverleitung 127 aus einem BigBag 121 in den Pulverbehälter 150 gefördert werden.

Statt des BigBags 121 oder auch zusätzlich dazu kann auch ein BigBag 120 mit einer Pumpe 123 vorgesehen sein. Das Pulver kann von der Pumpe 123 über eine Pulverleitung 126 direkt zum Pulverförderer 4 gepumpt werden.

Der BigBag 120 beziehungsweise 121 wird auch als Flexible Intermediate Bulk Container oder kurz FIBC bezeichnet. Er beinhaltet in der Regel grössere Pulvermengen als der Pulverkarton 110 und der Pulverkarton 111. Auch steht der BigBag 120/121 in der Regel weiter vom Pulverförderer 4 entfernt als der Pulverkarton 110 beziehungsweise 111. So kann der BigBag 120/121 in einem Abstand von zum Beispiel 30m zum Pulverförderer 4 stehen, wohingegen der Pulverkarton 110 beziehungsweise 111 zum Beispiel 5m vom Pulverförderer 4 entfernt steht.

Die Frischpulverstation 30 kann mehrere Druckluftregelventile 39 und 40 und Stellknöpfe 41 und 42 aufweisen. Das Druckluftregelventil 39 kann für die Einstellung der Fluidluft des Fluidbodens des Pulverbehälters 150 vorgesehen sein. Das Druckluftregelventil 40 dient zur Einstellung der Fluidluft an der Fluidisierkrone der Sauglanze 33. Mit Hilfe des Stellknopfs 41 kann die Stellung der Abluftklappe gesteuert werden. Über den Stellknopf 42 kann ein Bestätigungssignal an die Steuerung übermittelt werden.

Im Bodenbereich kann die Frischpulverstation 30 eine Absaugung 37 mit einer Absaugöffnung 37.1 aufweisen, um überschüssiges Pulver aus dem Inneren der Frischpulverstation 30 absaugen zu können. Die Frischpulverstation 30 kann auch einen flexiblen Absaugschlauch aufweisen, mit dem bei Bedarf manuell gereinigt werden kann.

Es kann vorgesehen sein, dass die Frischpulverstation 30 einen Schwenkmechanismus 45 für den Pulverförderer 49 aufweist. Der Schwenkmechanismus 45 weist einen Antrieb, der zum Beispiel als pneumatischer Antrieb ausgebildet sein kann, und einen Schwenkarm 45.1 auf. Mithilfe des Schwenkmechanismus 45 kann der Pulverförderer 49 aus der Förderposition (siehe Figur 15) in eine Reinigungsposition gebracht werden. In der Reinigungsposition ragt der Pulverförderer 49 in den Innenraum der Frischpulverstation 30. Zusätzlich können Luftdüsen 56 vorgesehen sein, um den unteren Bereich des Pulverförderers 49 zu reinigen, wenn er aus der Förderposition in die Reinigungsposition oder aus der Reinigungsposition in die Förderposition geschwenkt wird.

Der pneumatische Antrieb kann zwei pneumatisch angetriebenen Zylinder umfassen. Der Pulverförderer 49 kann damit in eine Reinigungsposition, eine erste Förderposition und eine zweite Förderposition gebracht werden. Um den Pulverförderer 49 in die Reinigungsposition (siehe Fig. 15) zu bringen, werden der Zylinder 1 und der Zylinder 2 eingefahren. In der ersten Förderposition befindet sich der Pulverförderer 49 über der Stellfläche 31. Dazu wird der Zylinder 1 eingefahren und Zylinder 2 ausgefahren. In der zweiten Förderposition befindet sich der Pulverförderer 49 über der Stellfläche 32; die Zylinder 1 und 2 sind ausgefahren. In der ersten Förderposition kann Pulver zurück in den Pulverkarton 110 und in der zweiten Förderposition kann Pulver zurück in den Pulverkarton 111 gefördert werden.

Die Sauglanze 33 ist mit der Linearachse 38 und dem Linearantrieb 44 in drei verschiedene Positionen bringbar: In der Reinigungsposition (siehe Fig. 15) befindet sich die Sauglanze 33 in der Reinigungsstation 53. In der ersten Förderposition befindet sich die Sauglanze 33 über der Stellfläche 31 und in der zweiten Förderposition über der Stellfläche 32.

Bei Bedarf kann die Frischpulverstation 30 auch mit einer eigenen Steuerung 43 ausgestattet sein. Mithilfe dieser Steuerung 43 können zum Beispiel die Sauglanze 33, die Reinigungsstation 52 für die Sauglanze 33, die Linearachse 38, der Linearantrieb 44, der Schwenkmechanismus 45 und die Blasdüsen 56 und 57 gesteuert werden.

Der zum Beispiel in den Figuren 16 und 18 gezeigte Pulverförderer 49 wird vorteilhafter Weise direkt über demjenigen Pulverkarton 110 beziehungsweise 111 positioniert, in den er Pulver zurückfördern soll. Da er die Schwerkraft nutzt, fällt das Pulver, nachdem das Auslassventil 49.2 des Pulverförderers 49 geöffnet ist, in den unter dem Pulverförderer 49 befindlichen Pulverkarton.

Der zur Rückführung des Pulvers dienende Pulverförderer 49 kann auch anders ausgebildet sein. Er kann zum Beispiel als Pulverpumpe ausgeführt sein. Da die Schwerkraft bei einer solchen Pulverpumpe nicht ausgenutzt wird, kann sie an verschiedenen Orten angeordnet sein. Sie kann sich zum Beispiel auch auf der gleichen Höhe wie der Pulverkarton 110 befinden.

Auf der Oberseite der Pulverstation 30 können zwei Abdeckungen 35 und 36 vorgesehen sein, die manuell geöffnet werden können. Damit hat das Personal auch von oben her Zugang zum Inneren der Frischpulverstation 30.

Bei Bedarf kann die Frischpulverstation 30 auch mit Seitenwänden 34 und einer Rückwand 48 ausgestattet sein.

Eine mögliche Ausführungsform einer gesamten Anlage zur Pulverbeschichtung von Werkstücken 65 ist in Figur 5 als Blockschaltbild vereinfacht dargestellt. Die gesamte Anlage kann über eine zentrale Steuerung 70 gesteuert werden. Die Steuerung 70 kann über entsprechende Steuerleitungen (in den Figuren nicht gezeigt) mit verschiedenen Komponenten der gesamten Anlage verbunden und vorgesehen sein, um die Pulverbeschichtungskabine 60 inklusive Pulverapplikatoren 80, die Frischpulverstation 30, das Pulverzentrum 1, die Pulverrückgewinnung 90 und/oder den Nachfilter 100 zu steuern.

Alternativ oder zusätzlich zur zentralen Steuerung 70 kann, wie bereits oben erwähnt, die Frischpulverstation 30 eine separate Steuerung 43 aufweisen. Das Gleiche gilt sinngemäß auch für alle anderen Komponenten der gesamten Anlage zur Beschichtung von Werkstücken mit Pulver.

Da beim Beschichtungsvorgang nicht alle von den Pulverapplikatoren 80 versprühten Pulverpartikel auf den zu beschichtenden Werkstücken 65 haften bleiben, muss das überschüssige Pulver, welches auch als Overspray bezeichnet wird, aus der Kabine 60 wieder entfernt werden. Dies ist zum einen deshalb notwendig, weil die Umgebung außerhalb der Kabine frei von Pulverstaub zu halten ist. Zum anderen steigt die Explosionsgefahr bei einer Überschreitung einer bestimmten Pulverkonzentration durch die in der Kabine schwebende Pulverstaubwolke. Dies gilt es zu vermeiden.

Das bei der Beschichtung anfallende Overspray wird zusammen mit der in der Kabine 60 befindlichen Luft als Pulver-Luftgemisch aus der Kabine 60 gesaugt und über eine Restpulverrohrleitung 92 einer Vorrichtung zur Pulverrückgewinnung 90 zugeführt. Die Vorrichtung zur Pulverrückgewinnung 90 kann beispielsweise als Zyklon ausgebildet sein. Das dort zurückgewonnene Pulver kann bei Bedarf über eine Pulverleitung 94 wieder dem Pulverzentrum 1 zugeführt werden. Um auch den Anteil des Pulvers herauszufiltern, der er im Zyklon 90 nicht herausgefiltert wurde, kann das Pulver-Luft-Gemisch vom Zyklon über eine Absaugleitung 93 dem Nachfilter 100 zugeführt werden.

Das Pulver-Luftgemisch in der Restpulverrohrleitung 92 wird auch als Restpulverluftstrom bezeichnet. Um das Overspray aus der Kabine 60 abzusaugen, weist die Kabine 60 beispielsweise einen Absaugschlitz auf. Er verbindet das Innere der Kabine 60 mit der Restpulverrohrleitung 92. Über den Absaugschlitz und das Absaugrohr 61 wird somit überschüssiges Pulver als Pulver-Luftgemisch aus dem Kabineninneren abgesaugt und einem Zyklonabscheider 90 oder kurzum Zyklon zugeführt, der als Monozyklon ausgebildet sein kann. Das Pulver-Luftgemisch strömt tangential in den Zyklon 90 und im Zyklon spiralförmig nach unten. Dabei werden die Pulverpartikel durch die bei der Rotation des Pulver-Luftstroms entstehende Zentrifugalkraft nach aussen an die Aussenwand des Zyklons 90 gedrückt. Die Pulverpartikel werden nach unten in Richtung des Pulverauslasses des Zyklons gefördert und dort gesammelt. Die von den Pulverpartikeln befreite Luft wird über das im Zyklon 90 befindliche, vertikale Zentralrohr abgesaugt. Der so gereinigte Luftstrom wird häufig noch einem Nachfilter 100 zugeführt, um auch noch das in der Luft verbliebene restliche Pulver herauszufiltern. Das im Zyklon 90 zurückgewonnene Pulver kann erneut zur Beschichtung verwendet und dem Pulverzentrum 1 über die Pulverleitung 94 zugeführt werden.

### Fördermodus/Förderbetrieb

Im Förderbetrieb befindet sich das Ultraschallsieb 24 im Arbeitsbehälter 3, 23 zwischen dem Pulvervorratsbehälter 3 und dem Pulverbehälterdeckel 23. Die Verriegelungen 18 sorgen dafür, dass der Arbeitsbehälter luftdicht abgeschlossen ist. Die Siebreinigungsvorrichtung 27 und die Behälterreinigungseinheit 28 befinden sich, wie in den Figuren 6 bis 9 dargestellt, in der Parkposition.

Die Parkposition für die Behälterreinigungseinheit 28 befindet sich neben dem Pulvervorratsbehälter 3. Die Formulierung «neben dem Pulvervorratsbehälter» umfasst auch über, unter, vor oder hinter dem Pulvervorratsbehälter.

Für den Förderbetrieb ist das Sieb 24 nicht zwingend notwendig. Die Pulverförderung kann auch ohne Ultraschallsieb oder gänzlich ohne Sieb 24 erfolgen.

### Reinigungsmodus/Reinigungsbetrieb

Um vom Förderbetrieb in den Reinigungsbetrieb umzuschalten, wird die Pulverförderung aus dem Pulvervorratsbehälter 3 eingestellt und das noch im Pulvervorratsbehälter 3 befindliche Restpulver wird über den Auslass 25.1 abgesaugt. Der noch im Arbeitsbehälter 3, 23 herrschende Überdruck wird auf Normaldruck abgebaut und die Verriegelungen 18 werden geöffnet.

Dann wird der Pulverbehälterdeckel 23 mit Hilfe des Linearantriebs 12 angehoben und das Ultraschallsieb 24 mit Hilfe des Schwenkmechanismus 16 aus der Arbeitsposition in die Reinigungsposition geschwenkt.

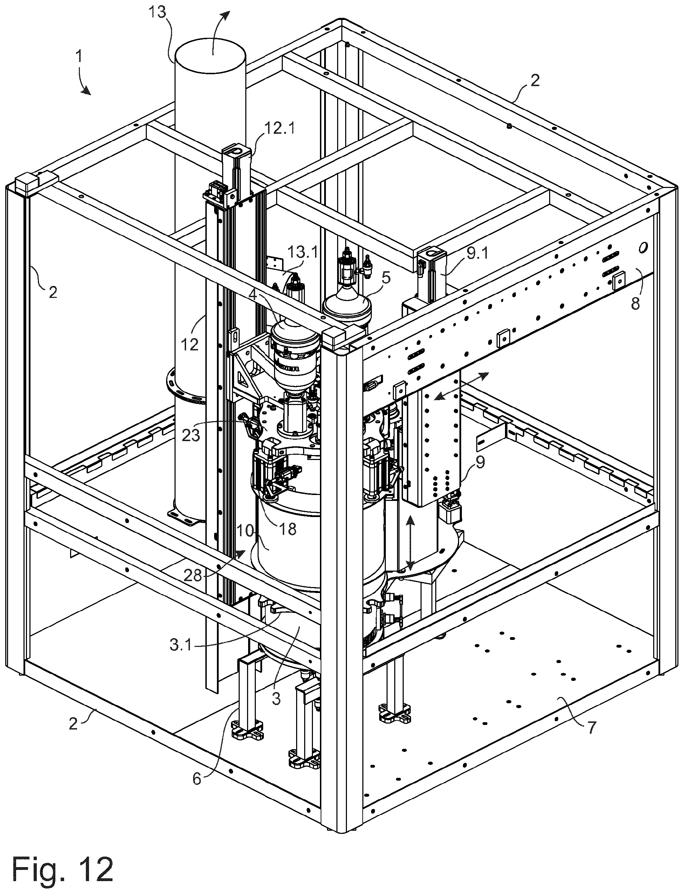

Wie in den Figuren 12 bis 14 gezeigt, hebt der Linearantrieb 12 den Behälterdeckel 23 so weit an, dass der Reinigungsbehälter 10 mit Hilfe der beiden Linearachsen 8 und 9 zwischen den Pulverbehälterdeckel 23 und den Pulvervorratsbehälter 3 gefahren werden kann. Anschliessend wird die Behälterreinigungseinheit 28 mit dem Reinigungsbehälter 10 soweit abgesenkt, bis der untere Reinigungsarm 26 sich im Inneren des Pulvervorratsbehälters 3 befindet und einen definierten Abstand zum Boden 25 des Pulvervorratsbehälter 3 aufweist.

Der Pulverbehälterdeckel 23 wird nun soweit abgesenkt bis sich der obere Reinigungsarm 11 im Inneren des Pulverbehälterdeckels 23 befindet und einen definierten Abstand zum Pulverbehälterdeckel 23 aufweist.

Bei der obigen Ausführungsform bleibt zwischen dem Pulverbehälterdeckel 23 und dem Reinigungsbehälter 10 ein Luftspalt bestehen. Auch zwischen dem Pulverbehälter 3 und dem Reinigungsbehälter 10 bleibt ein Luftspalt. Vom Nachfilter 100 wird Luft über die Luftspalte angesaugt. Damit wird verhindert, dass das während des Reinigungsvorgangs von den Druckluftdüsen 11.1 und 26.1 erzeugte Pulver-Luft-Gemisch an die Umgebung entweichen kann.

Stattdessen ist es aber auch möglich den Pulverbehälterdeckel 23 soweit abzusenken, dass zwischen dem Pulverbehälterdeckel 23 und dem Reinigungsbehälter 10 kein Spalt mehr bleibt. Auch der Spalt zwischen dem Reinigungsbehälter 10 und dem Pulverbehälter 3 kann eliminiert werden, wenn der Reinigungsbehälter 10 soweit abgesenkt wird, bis er auf dem Pulverbehälter 3 aufliegt.

In einer weiteren Ausführungsform kann mit den Verriegelungen 18 die Einheit aus Pulverbehälterdeckel 23, Reinigungsbehälter 10 und Pulvervorratsbehälter 3 luftdicht abgeschlossen werden.

In einem nächsten Schritt wird Druckluft durch die Düsen 11.1 und 26.1 in Richtung der Innenwandungen des Pulverbehälterdeckel 23 und des Pulvervorratsbehälters 3 geblasen. Das dabei entstehende Pulver-Luft-Gemisch wird über die Absaugleitung 13 abgesaugt und kann dem Zyklon 90 und/oder dem Nachfilter 100 zugeführt werden.

Die Reinigung des Pulverförderers 4 kann wie folgt geschehen. Mit einem Spülventil S13 (siehe Figur 5) wird Druckluft vorzugsweise stossweise in das Pulvereinlassventil M20 und durch den Pulverförderer 4 hindurch in Richtung Pulverauslassventil M21 geblasen. Die Druckluft wird durch die Absaugung 13 in Richtung Nachfilter 100 abgesaugt. Zudem wird gleichzeitig Druckluft über das Ventil 328 (siehe Figur 3) durch die poröse Wand des Rohr 305 geblasen und so das Rohr 305 von aussen nach innen von Pulverstaub freigeblasen. Für den Reinigungsvorgang wird am Druckregler 340 der Druckluftwert deutlich erhöht, zum Beispiel auf 5 bar. Damit strömt deutlich mehr Druckluft und die Reinigung wird effizienter.

Grundsätzlich kann auch die Reinigung des Pulverförderers 5 sinngemäss auf die oben beschriebene Art und Weise erfolgen.

Die beiden Pulverförderer 4 und 5 können über ein Materialventil M22 (siehe Figur 5) verbunden sein. Wird das Materialventil M22 entsprechend gesteuert, können die beiden Pulverförderer 4 und 5 über ein einziges Spülventil S13 gereinigt werden. Stattdessen kann der Pulverförderer 4 auch über ein erstes Spülventil und der Pulverförderer 5 über ein zweites Spülventil gereinigt werden.

Auch der Pulverförderer 49 kann auf die oben beschriebene Art und Weise gereinigt werden. Statt des Spülventils S13 kommt bei der Reinigung des Pulverförderers 49 das Spülventil S12 zum Einsatz. Die Absaugung des abgereinigten Pulvers kann über die Absaugöffnung 162 und Leitung 37 erfolgen.

Aus den oben genannten Gründen ist es von Vorteil, wenn nicht nur durch das Spülventil S13, sondern auch durch das Spülventil S12 eine grosse Druckluftmenge (z.B. 5 bar) geblasen wird.

Sobald sich das Sieb 24 beziehungsweise das Ultraschallsieb im Reinigungsbehälter 14 befindet, wird der Deckel 15 mit Hilfe des Pneumatikzylinders 17 geschlossen. Zwischen dem Deckel 15 und dem Reinigungsbehälter 14 kann ein Luftspalt verbleiben. Bei einer anderen Ausführungsform kann der Deckel 15 auch luftdicht auf dem Reinigungsbehälter 14 aufgesetzt werden.

Nun wird Druckluft durch die Düsen 19.1 und 20.1 von oben und unten auf das Sieb 24 geblasen. Das dabei entstehende Pulver-Luft-Gemisch wird über die Absaugleitung 13 abgesaugt und kann dem Zyklon 90 und/oder dem Nachfilter 100 zugeführt werden.

Sobald das Sieb 24 sauber ist, wird das Abblasen des Siebs beendet. Wenn der Pulverbehälter 3 und der Behälterdeckel 23 sauber sind, wird auch hier das Abblasen beendet.

Falls die Verriegelungen 18 vorher geschlossen wurden, werden sie nun wieder geöffnet. Der Behälterdeckel 23 wird angehoben und die Behältereinigungseinheit 28 wieder zurück in die Parkposition bewegt (siehe Figuren 6 - 9). Auch der Deckel 15 wird angehoben. Nachdem der Reinigungsmodus abgeschlossen ist, wird das Sieb 23 wieder zurück in seine Arbeitsposition gefahren. Anschliessend kann erneut mit dem Fördern von Pulver begonnen werden.

### Reinigungsbetrieb mit Intensivreinigung

Um das Pulverzentrum 1 und die übrigen mit dem Beschichtungspulver in Kontakt kommenden Komponenten der Anlage noch gründlicher zu reinigen, können die folgenden Reinigungsschritte durchgeführt werden. Die Schritte werden vorzugsweise automatisch durchgeführt und von der Steuerung 70 koordiniert. Mit der Reinigungseinheit 28 werden der Pulvervorratsbehälter 3 und der Behälterdeckel 23 wie oben beschrieben gereinigt. In einem weiteren Schritt wird ein Wechsel zu einem anderen Beschichtungspulver durchgeführt. Dabei kann das andere Beschichtungspulver dasjenige Pulver sein, mit dem als nächstes die Werkstücke 65 beschichtet werden sollen. Dies ist aber nicht zwingend notwendig. Stattdessen kann auch ein Wechsel zu einem speziellen Reinigungsmittel durchgeführt werden. Das Reinigungsmittel kann zum Beispiel ein Granulat mit einer Korngrösse zwischen 2 mm und 7 mm sein. Die Korngrösse, das Kornmaterial und die Kornbeschaffenheit werden vorzugsweise so ausgewählt, dass sie einerseits durch alle Öffnungen im Pulversystem gefördert werden können, und andererseits eine gute Reinigungswirkung haben. Bei der Auswahl des Reinigungsmittels wird vorteilhafter Weise auch darauf geachtet, dass kein zusätzlicher Verschleiss im Pulversystem und keine chemische Unverträglichkeit mit dem Beschichtungspulver entsteht.

In einem zusätzlichen Schritt wird für eine beschränkte Dauer in den Förderbetrieb geschaltet, sodass das andere Beschichtungspulver beziehungsweise das Reinigungsmittel durch die einzelnen Komponenten der Anlage strömt. Während des kurzen Förderbetriebs kann zum Beispiel mit 3 kg Pulver auf Verlust gefahren werden. Es ist aber auch möglich das Material (das Pulver beziehungsweise das Reinigungsmittel) im Zyklon 90 zurückzugewinnen. Damit können auch die Pulverleitungen 91, 92, 93 und 94 mit dem neuen Material gespült werden. Dies ist insbesondere dann von Vorteil, wenn mit dem neuen Pulver auf Rückgewinnung gefahren wird.

Anschliessend werden der Pulvervorratsbehälter 3 und der Behälterdeckel 23 mit Hilfe der Reinigungseinheit 28 erneut gereinigt.

Die vorhergehende Beschreibung der Ausführungsbeispiele gemäss der vorliegenden Erfindung dient nur zu illustrativen Zwecken. Im Rahmen der Erfindung sind verschiedene Änderungen und Modifikationen möglich. Der Schutzbereich wird durch die folgenden Ansprüche definiert.

### Bezugszeichenliste

- 1: Pulverzentrum
- 2: Rahmenprofile
- 3: Pulvervorratsbehälter
- 3.1: Verriegelungsaufnahme
- 3.2: Auslassöffnung für Pulver
- 3.3: Druckluftanschluss für Spülluft
- 3.4: Pulverauslass
- 4: Pulverförderer
- 4.2: Pulverauslass
- 5: Pulverförderer
- 6: Sockel
- 7: Bodenblech
- 8: Linearantrieb
- 8.1: Antriebsmotor
- 9: Linearantrieb
- 9.1: Antriebsmotor
- 10: Reinigungsbehälter
- 10.1: Auslass
- 11: Reinigungsarm für den Deckel
- 11.1: Reinigungsdüsen
- 12: Linearantrieb
- 12.1: Antriebsmotor
- 13: Absaugleitung/Absaugrohr
- 13.1: Einlassöffnung
- 13.2: Einlassöffnung
- 14: Siebreinigungsbehälter
- 14.1: Auslass
- 14.2: unterer Behälterabschnitt
- 15: Deckel der Siebreinigungsvorrichtung
- 16: Schwenkmechanismus
- 17: Hubzylinder
- 18: Verriegelung
- 19: Reinigungsarm
- 19.1: Sieb-Reinigungsdüsen
- 20: Reinigungsarm
- 20.1: Sieb-Reinigungsdüsen
- 21: Scharnier
- 22: Tragarm für das Pulversieb
- 23: Behälterdeckel
- 23.1: Pulvereinlass
- 24: Ultraschallsieb
- 24.1: Ultraschallwandler
- 25: Behälterboden
- 25.1: Fluidisiereinsatz
- 25.2: Auslass
- 26: Reinigungsarm für den Pulvervorratsbehälter
- 26.1: Reinigungsdüsen
- 27: Siebreinigungsvorrichtung
- 28: Reinigungseinheit/Behälterreinigungseinheit
- 30: Frischpulverstation
- 31: erste Stellfläche
- 32: zweite Stellfläche
- 34: Seitenwand
- 35: Abdeckung
- 36: Abdeckung
- 37: Absaugung
- 37.1: Absaugöffnung
- 37.2: Absaugöffnung
- 37.3: Absaugöffnung
- 38: Linearachse für die Sauglanze
- 39: Druckluftregelventil
- 40: Druckluftregelventil
- 41: Stellknopf
- 42: Stellknopf
- 43: Steuerung
- 44: Linearantrieb
- 45: Schwenkmechanismus für Pulverförderer
- 45.1: Arm
- 46: Waage
- 47: Waage
- 48: Rückwand
- 49: Pulverförderer
- 49.1: Pulvereinlassventil
- 49.2: Pulverauslassventil
- 50: Lager
- 51: Lager
- 52: Reinigungsstation
- 53: Reinigungsstation
- 54: Rüttler
- 55: Rüttler
- 56: Druckluftdüse
- 57: Druckluftdüse
- 60: Pulverbeschichtungskabine
- 65: Werkstück
- 70: Steuerung
- 71: Steuerleitung
- 80: Pulversprühpistole
- 81: Pulverleitung
- 90: Pulverrückgewinnung
- 91: Absaugleitung
- 92: Absaugleitung
- 93: Absaugleitung
- 94: Pulverleitung
- 95: Absaugleitung
- 96: Pulverrückführleitung
- 97: Pulverleitung
- 98: Pulverleitung
- 100: Nachfilter
- 110: Pulverkarton
- 111: Pulverkarton
- 120: BigBag
- 121: BigBag
- 123: Pulverpumpe
- 124: Pulverpumpe
- 125: Pulverpumpe
- 126: Pulverleitung
- 127: Pulverleitung
- 130: Kupplung
- 131: erste Gruppe von Anschlüssen
- 132: zweite Gruppe Anschlüssen
- 142: Restpulverleitung
- 150: Pulver-Zwischenbehälter
- 160: Absaugöffnung
- 162: Absaugöffnung
- 220: Rüttler
- 300: Pulverförderer
- 301: Behälter/Gehäuse
- 302: Gehäuseoberteil
- 302.1: trichterförmige Innenwand
- 302.2: Absatz
- 302.3: Innenwand
- 302.4: Absatz
- 302.5: Innenwand
- 302.6: Absatz
- 302.7: Stutzen
- 303: Gehäusemittelteil
- 304: Gehäuseunterteil
- 304.1: trichterförmige Innenwand
- 304.2: Absatz
- 304.3: Innenwand
- 304.4: Absatz
- 304.5: Innenwand
- 304.6: Stutzen
- 304.7: Gehäusewand
- 305: Rohr
- 305.1: erstes Rohrende/Pulverdurchlass
- 305.2: zweites Rohrende/Pulverdurchlass
- 305.3: erste Stirnfläche des Rohrs
- 305.4: zweite Stirnfläche des Rohrs
- 305.5: Fase an der Seitenfläche
- 305.6: innere Seitenfläche
- 305.7: Fase an der Seitenfläche
- 305.8: Fase an der Seitenfläche
- 305.9: äussere Seitenfläche
- 305.10: Fase an der Seitenfläche
- 305.11: obere Innenkante
- 305.12: untere Innenkante
- 306: Raum
- 307: Pulverkammer
- 308: Druckluft-Steueranschluss
- 308.1: Öffnung
- 309: Schraube
- 310: Pulvereinlassventil
- 310.1: Einlass des Einlassventils
- 310.2: Auslass des Einlassventils
- 311: Ventilgehäuse
- 312: Schlauchnippel
- 313: Druckluftventil
- 313.1: Druckluft-Steueranschluss
- 314: Erdungskabel
- 314.1: Erdungsanschluss
- 316: Ventil
- 320: Pulverauslassventil
- 320.1: Einlass des Auslassventils
- 320.2: Auslass des Auslassventils
- 321: Ventilgehäuse
- 322: Flansch
- 323: Druckluftventil
- 323.1: Steueranschluss
- 324: Flansch
- 325: Schraube
- 326: Schraube
- 327: Vakuumventil
- 328: Ventil
- 340: Druckregelventil
- A: Detail
- B: Detail
- G1 - G36: Auslassventile
- L1: innerer Abstand zwischen dem oberen Absatz und dem unteren Absatz
- L1': äusserer Abstand zwischen dem oberen Absatz und dem unteren Absatz
- L5: Länge des Filters
- LA: Längsachse
- M11: Materialventil für Pulver
- M20: Materialventil für Pulver
- M21: Materialventil für Pulver
- M22: Materialventil für Pulver
- S11: Spülventil
- S12: Spülventil
- S13: Spülventil
- x: x-Achse / Horizontale
- y: y-Achse
- z: z-Achse
- α2: Winkel am oberen Absatz
- α4: Winkel am unteren Absatz
- α52: Winkel an der oberen Stirnfläche des Filters
- α54: Winkel an der unteren Stirnfläche des Filters
- β2: Winkel
- β4: Winkel

## Patentansprüche

1. Pulverförderer zum Fördern von Beschichtungspulver,
- bei dem ein Gehäuse für einen Behälter (301) vorgesehen ist, das ein Gehäuseoberteil (302) mit einem Pulvereinlass (310.2) und einem oberen Absatz (302.2) sowie ein Gehäuseunterteil (304) mit einem Pulverauslass (320.1) und einem unteren Absatz (304.2) umfasst,
- bei dem der obere Absatz (302.2) und/oder der untere Absatz (304.2) mit der Horizontalen einen spitzen Winkel (α2; α4) einschliesst,
- bei dem ein Rohr (305) vorgesehen ist,
-- dessen Rohrenden (305.1, 305.2) offen sind, sodass das Pulver das Rohr (305) durchqueren kann,
-- das aus einem porösen, luftdurchlässigen Material ist,
-- und das stirnseitig zwischen dem oberen Absatz (302.2) des Gehäuseoberteils (302) und dem unteren Absatz (304.2) des Gehäuseunterteils (304) eingespannt ist,
- bei dem ein Pulvereinlassventil (310) vorgesehen ist, das mit dem Pulvereinlass (310.2) des Gehäuseoberteils (302) verbunden ist und
- bei dem ein Pulverauslassventil (320) vorgesehen ist, das mit dem Pulverauslass (320.1) des Gehäuseunterteils (304) verbunden ist.

2. Pulverförderer nach Patentanspruch 1,
bei dem das Gehäuseoberteil (302) trichterförmig ausgebildet ist.

3. Pulverförderer nach Patentanspruch 1 oder 2,
bei dem das Gehäuseunterteil (304) trichterförmig ausgebildet ist.

4. Pulverförderer nach einem der Patentansprüche 1 bis 3,
bei dem der Winkel (α2) des oberen Absatzes (302.2) und/oder der Winkel (α4) des unteren Absatzes (304.2) in einem Bereich von 1° bis 7° liegt.

5. Pulverförderer nach einem der Patentansprüche 1 bis 4,
bei dem die an den oberen Absatz (302.2) angrenzende Innenwand (302.3) mit der Vertikalen einen Winkel (β2) einschliesst, der in einem Bereich von 5° bis 15° liegt.

6. Pulverförderer nach einem der Patentansprüche 1 bis 5,
bei dem die an den unteren Absatz (304.2) angrenzende Innenwand (304.3) mit der Vertikalen einen Winkel (β4) einschliesst, der in einem Bereich von 5° bis 15° liegt.

7. Pulverförderer nach einem der Patentansprüche 1 bis 6,
bei dem der Abstand (L1; L1') zwischen dem oberen Absatz (302.2) und dem unteren Absatz (304.2) in Richtung Längsachse (LA) des Gehäuses (301) abnimmt.

8. Pulverförderer nach einem der Patentansprüche 1 bis 7,
bei dem das erste und/oder das zweite Rohrende (305.1, 305.2) eine Fase (305.5, 305.7, 305.8, 305.10) aufweist.

9. Pulverförderer nach einem der Patentansprüche 1 bis 8,
bei dem das Rohr (305) eine Länge (L5) aufweist, die zwischen 1 mm und 3 mm grösser ist, als der Abstand (L1) zwischen dem oberen Absatz (302.2) und dem unteren Absatz (304.2).

10. Pulverförderer nach einem der Patentansprüche 1 bis 9,
bei dem das Gehäuse für den Behälter (301) ein rohrförmiges Gehäusemittelteil (303) aufweist.

11. Pulverförderer nach Patentanspruch 10,
bei dem das Gehäusemittelteil (303) mit dem Gehäuseunterteil (304) verschraubt und/oder verklebt ist.

12. Pulverzentrum zum Versorgen einer Pulverbeschichtungsanlage mit Beschichtungspulver mit einem Pulverförderer nach einem der Patentansprüche 1 bis 11,
- bei dem der Pulverförderer (4) zur Versorgung eines Pulvervorratsbehälters (3) vorgesehen ist,
- bei dem der Pulvervorratsbehälter (3) eine Pulverfördervorrichtung (3, 23, G1) aufweist, um Pulver aus dem Pulvervorratsbehälter (3) in Richtung Pulverbeschichtungsanlage (60) zu transportieren,
- bei dem ein Behälterdeckel (23) vorgesehen ist, der während der Pulverförderung den Pulvervorratsbehälter (3) abdeckt und zum Zwecke der Reinigung des Pulvervorratsbehälters (3) abnehmbar ist,
- bei dem eine Reinigungseinheit (28) zum Reinigen des Pulvervorratsbehälters (3) und des Behälterdeckels (23) vorgesehen ist, die mittels eines Manipulators (8, 9) aus einer Parkposition neben dem Pulvervorratsbehälter in eine Reinigungsposition im Pulvervorratsbehälter bewegbar ist,
- bei dem eine Steuerung (70) vorgesehen ist, mit der der Pulverförderer (4), die Pulverförderervorrichtung (3, 23, G1), die Reinigungseinheit (28) und der Manipulator (8, 9) steuerbar sind.

13. Pulverzentrum nach Patentanspruch 12,
bei dem die Steuerung (70) derart ausgebildet und betreibbar ist, dass sie im Reinigungsbetrieb das Innere des Pulverförderers (4) mit Spülluft spülen kann.

14. Pulverzentrum nach Patentanspruch 12 oder 13,
bei dem die Reinigungseinheit (28) Druckluftdüsen (11.1, 26.1) zum Abblasen des Pulvervorratsbehälters (3) und des Behälterdeckels (23) aufweist.

15. Verfahren zum Herstellen eines Pulverförderers nach einem der Patentansprüche 1 bis 11,
- bei dem das Rohr (305) erwärmt wird,
- bei dem mit einem Werkzeug die Rohrenden (305.1, 305.2) des erwärmten Rohrs (305) so geformt werden, dass die Stirnseiten (305.3, 305.4) des Rohrs (305) zu den schrägen Absätzen (302.2, 304.2) passen,
- bei dem das Rohr (305) zwischen dem Gehäuseoberteil (302) und dem Gehäuseunterteil (304) eingespannt wird.

## Claims

1. A powder conveyor for conveying coating powder
- wherein a housing for a container (301) is provided, which comprises a housing upper part (302) comprising a powder inlet (310.2) and an upper ledge (302.2), as well as a housing bottom part (304) comprising a powder outlet (320.1) and a lower ledge (304.2),
- wherein the upper ledge (302.2) and/or the lower ledge (304.2) draws an acute angle (α2; α4) with the horizonal,
- wherein a tube (305) is provided,
-- the tube ends (305.1, 305.2) of which are open, so that the powder can pass through the tube (305),
-- which is made of a porous, air-permeable material,
-- and which is clamped, on the end face, between the upper ledge (302.2) of the housing upper part (302) and the lower ledge (304.2) of the housing bottom part (304),
- wherein a powder inlet valve (310) is provided, which is connected to the powder inlet (310.2) of the housing upper part (302), and
- wherein a powder outlet valve (320) is provided, which is connected to the powder outlet (320.1) of the housing bottom part (304).

2. The powder conveyor according to claim 1,
wherein the housing upper part (302) is formed in a funnel-shaped manner.

3. The powder conveyor according to claim 1 or 2,
wherein the housing bottom part (304) is formed in a funnel-shaped manner.

4. The powder conveyor according to any one of claims 1 to 3,
wherein the angle (α2) of the upper ledge (302.2) and/or the angle (α4) of the lower ledge (304.2) lies in a range of between 1° and 7°.

5. The powder conveyor according to any one of claims 1 to 4,
wherein the inner wall (302.3), which is adjacent to the upper ledge (302.2), draws an angle (β2), which lies in a range of between 5° and 15°, with the vertical.

6. The powder conveyor according to any one of claims 1 to 5,
wherein the inner wall (304.3), which is adjacent to the lower ledge (304.2), draws an angle (β4), which lies in a range of between 5° and 15°, with the vertical.

7. The powder conveyor according to any one of claims 1 to 6,
wherein the distance (L1; L1') between the upper ledge (302.2) and the lower ledge (304.2) decreases in the direction of the longitudinal axis (LA) of the housing (301).

8. The powder conveyor according to any one of claims 1 to 7,
wherein the first and/or the second tube end (305.1, 305.2) has a chamfer (305.5, 305.7, 305.8, 305.10).

9. The powder conveyor according to any one of claims 1 to 8,
wherein the tube (305) has a length (L5), which is between 1 mm and 3 mm larger than the distance (L1) between the upper ledge (302.2) and the lower ledge (304.2) .

10. The powder conveyor according to any one of claims 1 to 9,
wherein the housing for the container (301) has a tubular housing middle part (303).

11. The powder conveyor according to claim 10,
wherein the housing middle part (303) is screwed and/or adhered to the housing bottom part (304).

12. A powder center for supplying a powder coating facility with coating powder, comprising a powder conveyor according to any one of claims 1 to 11,
- wherein the powder conveyor (4) is provided for supplying a powder storage container (3),
- wherein the powder storage container (3) has a powder conveying device (3, 23, G1) for transporting powder out of the powder storage container (3) in the direction of a powder coating facility (60),
- wherein a container lid (23) is provided, which covers the powder storage container (3) during the powder conveyance and can be removed at least partly for the purpose of cleaning the powder storage container (3),
- wherein a cleaning unit (28) is provided for cleaning the powder storage container (3) and the container lid (23), which can be moved from a parking position next to the powder storage container into a cleaning position in the powder storage container by means of a manipulator (8, 9),
- wherein a controller (70) is provided, by means of which the powder conveyor (4), the powder conveying device (3, 23, G1), the cleaning unit (28), and the manipulator (8, 9) can be controlled.

13. The powder center according to claim 12,
wherein the controller (70) is formed and can be operated such that it can purge the interior of the powder conveyor (4) with purge air during the cleaning operation.

14. The powder center according to claim 12 or 13,
wherein the cleaning unit (28) has compressed air nozzles (11.1, 26.1) for blowing off the powder storage container (3) and the container lid (23).

15. A method for producing a powder conveyor according to any one of claims 1 to 11,
- wherein the tube (305) is heated,
- wherein the tube ends (305.1, 305.2) of the heated tube (305) are shaped by means of a tool such that the end faces (305.3, 305.4) of the tube (305) match the slanted ledges (302.2, 304.2),
- wherein the tube (305) is clamped between the housing upper part (302) and the housing lower part (304).

## Revendications

1. Transporteur de poudre permettant d'acheminer la poudre de revêtement,
- dans lequel est prévu un carter pour un conteneur (301) qui comprend une partie supérieure du carter (302) avec une entrée de poudre (310.2) et un épaulement supérieur (302.2) ainsi qu'une partie inférieure du carter (304) avec une sortie de poudre (320.1) et un épaulement inférieur (304.2),
- dans lequel l'épaulement supérieur (302.2) et/ou l'épaulement inférieur (304.2) comprend un angle pointu (α2; α4) avec la ligne horizontale,
- dans lequel est prévu un tube (305),
- - dont les extrémités du tube (305.1, 305.2) sont ouvertes de telle manière à ce que la poudre puisse passer par le tube (305),
- - qui est composé d'un matériau poreux, perméable à l'air,
- - et qui est serré, sur la face frontale, entre l'épaulement supérieur (302.2) de la partie supérieure du carter (302) et l'épaulement inférieur (304.2) de la partie inférieure du carter (304),
- dans lequel est prévue une vanne d'entrée de poudre (310) qui est reliée à l'entrée de poudre (310.2) de la partie supérieure du carter (302) et
- dans lequel est prévue une vanne de sortie de poudre (320) qui est reliée à la sortie de poudre (320.1) de la partie inférieure du carter (304).

2. Transporteur de poudre conformément à la revendication 1,
dans lequel la partie supérieure du carter (302) est conçue en forme d'entonnoir.

3. Transporteur de poudre conformément à la revendication 1 ou 2,
dans lequel la partie inférieure du carter (304) est conçue en forme d'entonnoir.

4. Transporteur de poudre conformément à l'une des revendications 1 à 3,
dans lequel l'angle (α2) de l'épaulement supérieur (302.2) et/ou l'angle (α4) de l'épaulement inférieur (304.2) se situe dans une plage de 1° à 7°.

5. Transporteur de poudre conformément à l'une des revendications 1 à 4,
dans lequel la paroi intérieure (302.3) adjacente à l'épaulement supérieur (302.2) inclut, avec la ligne verticale, un angle (β2) qui se situe dans une plage de 5° à 15°.

6. Transporteur de poudre conformément à l'une des revendications 1 à 5,
dans lequel la paroi intérieure (304.3) adjacente à l'épaulement inférieur (304.2) inclut, avec la ligne verticale, un angle (β4) qui se situe dans une plage de 5° à 15°.

7. Transporteur de poudre conformément à l'une des revendications 1 à 6,
dans lequel la distance (L1; L1') entre l'épaulement supérieur (302.2) et l'épaulement inférieur (304.2) diminue en direction de l'axe longitudinal (LA) du carter (301).

8. Transporteur de poudre conformément à l'une des revendications 1 à 7,
dans lequel la première et/ou la deuxième extrémité du tube (305.1, 305.2) présente un chanfrein (305.5, 305.7, 305.8, 305.10).

9. Transporteur de poudre conformément à l'une des revendications 1 à 8,
dans lequel le tube (305) présente une longueur (L5) qui, entre 1 mm et 3 mm, est plus grande que la distance (L1) entre l'épaulement supérieur (302.2) et l'épaulement inférieur (304.2).

10. Transporteur de poudre conformément à l'une des revendications 1 à 9,
dans lequel le carter pour le conteneur (301) présente une partie centrale tubulaire du carter (303).

11. Transporteur de poudre conformément à la revendication 10,
dans lequel la partie centrale du carter (303) est vissée et/ou collée avec la partie inférieure du carter (304).

12. Centre d'alimentation en poudre, destiné à alimenter une installation de poudrage en poudre de revêtement au moyen d'un transporteur de poudre conformément à l'une des revendications 1 à 11,
- dans lequel est prévu le transporteur de poudre (4) pour alimenter un réservoir de poudre (3),
- dans lequel le réservoir de poudre (3) présente un dispositif d'acheminement de la poudre (3, 23, G1) pour transporter la poudre du réservoir de poudre (3) en direction de l'installation de poudrage (60),
- dans lequel est prévu un couvercle du réservoir (23), lequel couvre le réservoir de poudre (3) pendant l'acheminement de la poudre et peut être enlevé à des fins de nettoyage du réservoir de poudre (3),
- dans lequel est prévue une unité de nettoyage (28) permettant le nettoyage du réservoir de poudre (3) et du couvercle du réservoir (23), laquelle peut être déplacée d'une position de repos à côté du réservoir de poudre dans une position de nettoyage dans le réservoir de poudre au moyen d'un manipulateur (8, 9),
- dans lequel est prévue une commande (70) permettant de piloter le transporteur de poudre (4), le dispositif d'acheminement de poudre (3, 23, G1), l'unité de nettoyage (28) et le manipulateur (8, 9).

13. Centre d'alimentation en poudre conformément à la revendication 12,
dans lequel la commande (70) est conçue et peut être utilisée de telle manière à pouvoir purger l'intérieur du transporteur de poudre (4) au moyen d'air de purge en mode de nettoyage.

14. Centre d'alimentation en poudre conformément à la revendication 12 ou 13,
dans lequel l'unité de nettoyage (28) présente des buses d'air comprimé (11.1, 26.1) pour le soufflage du réservoir de poudre (3) et du couvercle du réservoir (23).

15. Procédé de fabrication d'un transporteur de poudre conformément à l'une des revendications 1 à 11,
- dans lequel le tube (305) est chauffé,
- dans lequel les extrémités du tube (305.1, 305.2) du tube (305) chauffé sont formées de telle manière à ce que les faces frontales (305.3, 305.4) du tube (305) s'adaptent aux épaulements inclinés (302.2, 304.2),
- dans lequel le tube (305) est serré entre la partie supérieure du carter (302) et la partie inférieure du carter (304).
